# EUROPÄISCHE PATENTSCHRIFT

(11) **EP 2 686 360 B1**
(45) Veröffentlichungstag und Bekanntmachung des Hinweises auf die Patenterteilung: **12.10.2016**
(21) Anmeldenummer: 12702024.6
(22) Anmeldetag: 31.01.2012
(51) Int. Cl.: C08G 18/16, C08G 18/22, C09D 175/00, C09D 175/04

(54) **POLYURETHAN-BESCHICHTUNGSMITTELZUSAMMENSETZUNG, MEHRSTUFIGE BESCHICHTUNGSVERFAHREN UNTER VERWENDUNG DIESER BESCHICHTUNGSMITTELZUSAMMENSETZUNGEN SOWIE DIE VERWENDUNG DER BESCHICHTUNGSMITTELZUSAMMENSETZUNG ALS KLARLACK UND PIGMENTIERTER LACK BZW. ANWENDUNG DES BESCHICHTUNGSVERFAHRENS FÜR DIE AUTOMOBILREPARATURLACKIERUNG UND/ODER FÜR DIE BESCHICHTUNG VON KUNSTSTOFFSUBSTRATEN UND/ODER NUTZFAHRZEUGEN**
POLYURETHANE COATING MATERIAL COMPOSITION, MULTISTAGE COATING METHODS USING THESE COATING MATERIAL COMPOSITIONS, AND ALSO THE USE OF THE COATING MATERIAL COMPOSITION AS CLEARCOAT MATERIAL AND PIGMENTED COATING MATERIAL, AND APPLICATION OF THE COATING METHOD FOR AUTOMOTIVE REFINISH AND/OR FOR THE COATING OF PLASTICS SUBSTRATES AND/OR OF UTILITY VEHICLES
COMPOSITIONS DE REVÊTEMENT À BASE DE POLYURÉTHANNE, PROCÉDÉ DE REVÊTEMENT EN PLUSIEURS ÉTAPES REPOSANT SUR L'UTILISATION DESDITES COMPOSITIONS, UTILISATION DE CES COMPOSITIONS DE REVÊTEMENT EN TANT QUE VERNIS TRANSPARENT ET PEINTURE PIGMENTÉE, ET UTILISATION DUDIT PROCÉDÉ DE REVÊTEMENT POUR LA PEINTURE DANS LA RÉPARATION AUTOMOBILE ET/OU POUR L'APPLICATION D'UN REVÊTEMENT SUR DES SUBSTRATS EN PLASTIQUE ET/OU DES VÉHICULES UTILITAIRES

(30) Priorität: 14.03.2011 US 201161452175 P; 14.03.2011 EP 11158001
(43) Veröffentlichungstag der Anmeldung: 22.01.2014
(73) Patentinhaber: BASF Coatings GmbH, 48165 Münster (DE)
(72) Erfinder: WESTHOFF, Elke, 48565 Steinfurt (DE); HOFFMANN, Peter, 48308 Senden (DE); MÖLLER, Bernadette, 48734 Maria-Veen (DE); SCHNIER, Benedikt, 48291 Telgte (DE)
(74) Vertreter: Leifert & Steffan
(86) Internationale Anmeldenummer: PCT/EP2012/051574
(87) Internationale Veröffentlichungsnummer: WO 2012/123166

(56) Entgegenhaltungen:
- DE-A1-102008 026 341
- US-A- 3 795 636
- US-A1- 2006 247 341

## Beschreibung

Die vorliegende Erfindung betrifft Beschichtungsmittelzusammensetzungen enthaltend mindestens eine Polyhydroxylgruppen-haltige Verbindung (A), mindestens eine Polyisocyanatgruppen-haltige Verbindung (B) mit freien und/oder blockierten Isocyanatgruppen, mindestens einen Katalysator (D) auf Basis eines Zink-Amidin-Komplexes, der herstellbar ist durch Umsetzung von 1,0 Molen eines oder mehrerer Zink(II)biscarboxylate mit 0,1 bis 1,8 Molen eines Amidins der Formel (I) oder mit 0,1 bis 1,8 Molen einer Mischung aus zwei oder mehreren Amidinen der Formel (I) 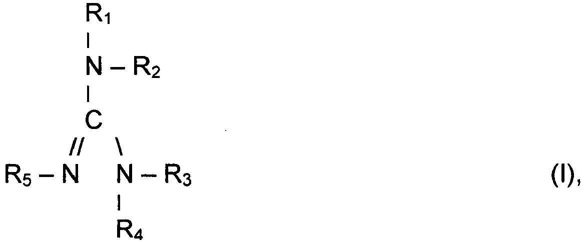 wobei R₅ = Wasserstoff und R₁, R₂, R₃, und R₄ jeweils gleiche oder verschiedene Reste sind, wobei R₁ und R₃ Wasserstoff oder ein Alkylrest oder ein Arylrest sind und R₂ und R₄ ein Alkylrest oder ein Arylrest sind, und
mindestens eine monomere aromatische, ggf. substituierte Carbonsäure (S), deren Carboxylgruppe in Konjugation zu einem π-Elektronensystem steht. Gegenstand der vorliegenden Erfindung sind außerdem mehrstufige Beschichtungsverfahren unter Verwendung dieser Beschichtungsmittelzusammensetzungen sowie die Verwendung der Beschichtungsmittelzusammensetzungen als Klarlack bzw. Anwendung des Beschichtungsverfahrens für die Automobilreparaturlackierung und/oder für die Beschichtung von Kunststoffsubstraten und/oder Nutzfahrzeugen.

Polyurethan-Beschichtungsmittel enthalten üblicherweise einen Katalysator, wobei neben sauren Verbindungen insbesondere tertiäre Amine und/oder Metallverbindungen, wie beispielsweise verschiedene Zinnverbindungen, insbesondere Dibutylzinndilaurat und Dibutylzinnoxid, zum Einsatz kommen.

Der Einsatz zinnhaltiger Katalysatoren ist aufgrund der vielen Zinnverbindungen innewohnenden Toxizität auch in Beschichtungsmitteln zu vermeiden. Von der "Working Group on Classification and Labelling" der EU-Kommission wurden Dibutylzinnoxid (DBTO) und Dibutylzinndilaurat (DBTL) entsprechend kategorisiert.

In dem im Internet unter der Adresse www.wernerblank.com zugänglichen Artikel "Catalysis of the Isocyanate-Hydroxyl Reaction by Non-Tin Catalysts" von Werner J. Blank, Z.A. He und Ed. T. Hessell der Firma King Industries Inc. werden daher Alternativen zu den üblichen zinnhaltigen Katalysatoren auf Basis verschiedener Metallsalze und Metallkomplexe, wie Zirkoniumchelate, Aluminiumchelat und Wismuthcarboxylat, beschrieben.

Aus der DE 10 2008 061 329 A1 sind Beschichtungsmittel bekannt, bei denen der Einsatz metallhaltiger Katalysatoren möglichst vermieden werden soll und die stattdessen als Katalysator 1,3 substituierte Imidazoliumsalze zur Deblockierung blockierter Polyisocyanate in Polyurethan-Beschichtungsmitteln enthalten.

Die WO04/029121 beschreibt Polyurethanzusammensetzungen, die durch Zugabe von Säuren mit einem pKs-Bereich zwischen 2,8 und 4,5 in Bezug auf die Reaktivität der Zusammensetzung stabilisiert sind, wobei die Säuren gleichzeitig als Katalysator genutzt werden können. Als Säuren mit einem pKs-Bereich zwischen 2,8 und 4,5 werden dabei beispielsweise Benzoesäure, Hydroxybenzoesäure, Salicylsäure, Phthalsäure u.Ä. eingesetzt. Bevorzugt enthalten die Zusammensetzungen keinen weiteren Katalysator, es können aber auch zusätzlich noch die üblichen bekannten Polyurethan-Katalysatoren, wie tertiäre Amine oder Amidine oder metallorganische Verbindungen, wie insbesondere Zinn-Verbindungen, eingesetzt werden. Bei Verwendung von Aminen als Katalysator muss hohe Sorgfalt in Bezug auf Auswahl des Amintyps und dessen Menge verwandt werden, da die aminischen Katalysatoren zum Teil die stabilisierende Wirkung der zugesetzten organischen Säuren eliminieren können.

In dem US Patent US 5,847,044 sind Polyurethan-Pulverlacke beschrieben, die als Katalysatoren N, N, N'-trisubstituierte Amidine, insbesondere bicyclische Amidine, enthalten.

Die WO 09/135600 beschreibt Polyurethanzusammensetzungen, insbesondere Dichtungsmassen, Klebstoffe und Schäume, die als Katalysator das Umsetzungsprodukt eines Metallsalzes mit stickstoffhaltigen, heterocyclischen Verbindungen, insbesondere substituierten Imidazolen, enthalten.

Die DE-A-24 34 185 beschreibt ein Verfahren zur Herstellung von Amidin-Metall-Komplexen und ihre Verwendung als Katalysatoren für die Isocyanat-Polyadditionsreaktion. Die Amidin-Metall-Komplexe werden dabei hergestellt durch Umsetzung eines Amidins mit einer 0,5- bis 4-fachen molaren Menge einer Metallverbindung, wobei als Amidine sowohl monocyclische und/oder bicyclische Verbindungen, wie insbesondere Imidazole, als auch acyclische Verbindungen, wie Formamidine, Acetamidine, Benzamidine und Guanidine, eingesetzt werden. Als Metallverbindungen werden solche des dreiwertigen Eisens, des zweiwertigen Nickels, des zweiwertigen Zinks, des zweiwertigen Mangans, des zweiwertigen Zinns oder des vierwertigen Zinns eingesetzt, wobei insbesondere die entsprechenden Carboxylate zum Einsatz kommen.

Schließlich beschreiben das US Patent US 7,485,729 B2 sowie die äquivalenten Schriften WO06/022899, US 2006/0247341 A1 und US 2009/0011124 A1 Organo-Metall-Verbindungen und sie enthaltende Beschichtungsmittel. Als Beschichtungsmittel werden Pulverlacke auf der Basis von hydroxylgruppenhaltigen Polyacrylaten bzw. Polyestern und uretdiongruppenhaltigen Polyisocyanaten, Flüssiglacke auf der Basis von hydroxylgruppenhaltigen Polyacrylaten bzw. Polyestern und blockierten Polyisocyanaten sowie lösemittelhaltige Beschichtungsmittel auf der Basis von Epoxy/Carboxy- bzw. Epoxy/Anhydrid-Komponenten beschrieben. Die als Katalysator eingesetzten Organo-Metall-Verbindungen sind neben anderen Metall-Amidin-Komplexen cyclische oder acyclische Zinkbiscarboxylat-Bis-Amidin-Komplexe, wie beispielsweise Zn(1,1,3,3-Tetramethylguanidin)₂(2-Ethylhexanoat)₂.

### Aufgabe

Aufgabe der vorliegenden Erfindung war es daher, Beschichtungsmittelzusammensetzungen, insbesondere für die Automobilreparaturlackierung und die Beschichtung von Nutzfahrzeugen, zur Verfügung zu stellen, die eine gute Montagefestigkeit bereits nach sehr kurzer Zeit gewährleisten, d.h. dass sie eine schnelle Aushärtung auch unter den Bedingungen der Reparaturlackierung und der Lackierung von Nutzfahrzeugen gewährleisten sollten, also bereits nach Härtung von 30 min bei 60°C soweit ausgehärtet sein sollten, dass erste Montagearbeiten oder Demaskierungen ohne Beschädigung der Beschichtung durchgeführt werden können. Gleichzeitig sollten die Beschichtungsmittelzusammensetzungen bei Raumtemperatur und nach Vermischen der Bindemittelkomponente mit der Isocyanatkomponente aber eine gute Topfzeit ("Potlife") von mindestens 2 Stunden aufweisen. Unter Topfzeit versteht man dabei die Zeitspanne, innerhalb derer die Beschichtungsmittelzusammensetzung den doppelten Wert seiner Anfangsviskosität erreicht hat. Außerdem sollten die Beschichtungsmittelzusammensetzungen zu Beschichtungen mit einer guten Durchhärtung und einer ausreichenden Endhärte führen. Ferner sollten diese Beschichtungsmittelzusammensetzungen keine Farbveränderungen vor und nach der Aushärtung aufzeigen. Besonders im Bereich von Klarlacken in der Automobilindustrie bestehen hohe Anforderungen an die Eigenfarbe der Systeme. So darf der Katalysator weder eine Eigenfarbe aufweisen, noch darf er mit den üblichen Lackkomponenten zu einer Verfärbung bei der Anmischung oder der Aushärtung des Lackes führen. Die resultierenden gehärteten Beschichtungen sollten ferner nach Belastung im sogenannten WOM-Test (WOM = Weather-Ometer Test, bestimmt gemäß SAE (Society of Automotive Engineers) Norm J2527_04) nicht zur Vergilbung neigen. Die Vergilbung wird bestimmt mit dem Mehrwinkelfarbmessgerät BYK-mac Firma BYK-Gardner GmbH, D-82538 Geretsried und Berechnung nach DIN 6174.

Des Weiteren sollte dem Beschichtungssystem der Katalysator von vornherein zugegeben werden können. Jedoch soll die Beimischung des Katalysators zu den Beschichtungssystemen von Anfang an nicht die Lagerstabilität der Beschichtungszusammensetzung negativ beeinflussen. Zudem sollte der Katalysator hydrolyseunempfindlich sein, da selbst in organisch gelösten Systemen die üblicherweise hohe Konzentration an Hydroxylgruppen zu einer Reduzierung der Katalysatoraktivität über die Lagerzeit führen kann. Speziell im Bereich der Autoreparaturlackierung ist eine extrem hohe Lagerstabilität auch bei höheren Temperaturen von Vorteil.

Schließlich sollten die Beschichtungsmittelzusammensetzungen einfach und sehr gut reproduzierbar herstellbar sein und während der Lackapplikation keine ökologischen Probleme bereiten. Insbesondere sollten Zinn-haltige Katalysatoren vermieden oder bestenfalls ganz verzichtbar sein.

### Lösung der Aufgabe

Im Lichte der obengenannten Aufgabenstellung wurde eine Beschichtungsmittelzusammensetzung gefunden, enthaltend mindestens eine Polyhydroxylgruppen-haltige Verbindung (A),
mindestens eine Polyisocyanatgruppen-haltige Verbindung (B) mit freien und/oder blockierten Isocyanatgruppen,
mindestens einen Katalysator (D) auf Basis eines Zink-Amidin-Komplexes, der herstellbar ist durch Umsetzung von 1,0 Molen eines oder mehrerer Zink(II)biscarboxylate mit 0,1 bis 1,8 Molen eines Amidins der Formel (I) oder mit 0,1 bis 1,8 Molen einer Mischung aus zwei oder mehreren Amidinen der 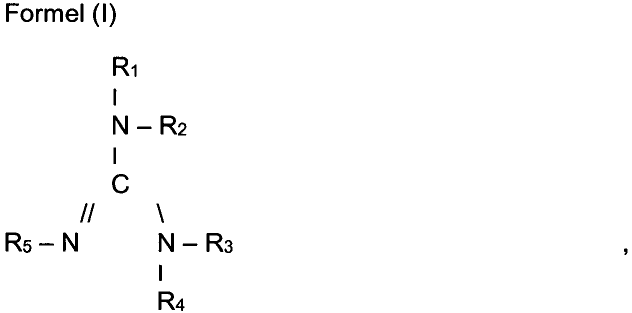 wobei R₅ = Wasserstoff und R₁, R₂, R₃, und R₄ jeweils gleiche oder verschiedene Reste sind, wobei R₁ und R₃ Wasserstoff oder ein Alkylrest oder ein Arylrest sind und R₂ und R₄ ein Alkylrest oder ein Arylrest sind, und mindestens eine monomere aromatische, ggf. substituierte Carbonsäure (S), deren Carboxylgruppe in Konjugation zu einem π-Elektronensystem steht.

Gegenstand der vorliegenden Erfindung sind außerdem mehrstufige Beschichtungsverfahren unter Verwendung dieser Beschichtungsmittelzusammensetzungen sowie die Verwendung der Beschichtungsmittelzusammensetzungen als Klarlack bzw. Anwendung des Beschichtungsverfahrens für die Automobilreparaturlackierung und/oder für die Beschichtung von Kunststoffsubstraten und/oder Nutzfahrzeugen.

Es ist überraschend und war nicht vorhersehbar, dass die Beschichtungsmittelzusammensetzungen auch unter den Bedingungen für die Automobilreparaturlackierung eine gute Montagefestigkeit bereits nach sehr kurzer Zeit gewährleisten, d.h. dass sie eine schnelle Aushärtung auch unter den Bedingungen der Reparaturlackierung gewährleisten, also bereits nach Härtung von 30 min bei 60°C klebfrei sind. Gleichzeitig zeigen die Beschichtungsmittelzusammensetzungen bei Raumtemperatur und nach Vermischen der Bindemittelkomponente mit der Isocyanatkomponente aber eine gute Topfzeit ("Potlife") von mindestens 2 Stunden. Unter Topfzeit versteht man dabei die Zeitspanne, innerhalb derer die Beschichtungsmittelzusammensetzung den doppelten Wert seiner Anfangsviskosität erreicht hat.

Außerdem führen die Beschichtungsmittelzusammensetzungen zu Beschichtungen mit einer guten Durchhärtung und einer ausreichenden Endhärte. Ferner zeigt der Katalysator weder eine Eigenfarbe, noch führt er mit den üblichen Lackkomponenten zu einer Verfärbung bei der Anmischung oder der Aushärtung des Lackes. Außerdem neigen die resultierenden gehärteten Beschichtungen nach Belastung im WOM-Test (WOM = Weather-Ometer Test, bestimmt gemäß SAE (Society of Automotive Engineers) Norm J2527_04) nicht zur Vergilbung.

Des Weiteren kann dem Beschichtungssystem der Katalysator von vornherein zugegeben werden, ohne dass dadurch die Lagerstabilität der Beschichtungsmittelzusammensetzungen negativ beeinflusst wird. Zudem ist der Katalysator hydrolyseunempfindlich, so dass die üblicherweise hohe Konzentration an Hydroxylgruppen selbst in organisch gelösten Systemen zu keiner Reduzierung der Katalysatoraktivität über die Lagerzeit führt, was speziell im Bereich der Autoreparaturlackierung von Vorteil ist.

Schließlich sind die Beschichtungsmittelzusammensetzungen einfach und sehr gut reproduzierbar herstellbar und bereiten während der Lackapplikation keine ökologischen Probleme. Insbesondere können Zinn-haltige Katalysatoren vermieden bzw. sind bestenfalls sogar ganz verzichtbar.

### Die Polyhydroxylgruppen-haltige Verbindung (A)

Als Polyhydroxylgruppen-haltige Verbindung (A) können alle dem Fachmann bekannten Verbindungen eingesetzt werden, welche mindestens 2 Hydroxylgruppen pro Molekül aufweisen und oligomer und/oder polymer sind. Es können als Komponente (A) auch Mischungen verschiedener oligomerer und/oder polymerer Polyole eingesetzt werden.

Die bevorzugten oligo- und/oder polymeren Polyole (A) weisen massenmittlere Molekulargewichte Mw > 500 Dalton, gemessen mittels Gelpermeationschromatographie (GPC) gegen einen Polystyrolstandard, bevorzugt zwischen 800 und 100.000 Dalton, insbesondere zwischen 1.000 und 50.000 Dalton auf.

Besonders bevorzugt sind Polyesterpolyole, Polyurethanpolyole, Polysiloxanpolyole, Polyacrylatpolyole und/oder Polymethacrylatpolyole sowie deren Mischpolymerisate, im folgenden Polyacrylatpolyole genannt.

Die Polyole weisen bevorzugt eine OH-Zahl von 30 bis 400 mg KOH/g, insbesondere zwischen 100 und 300 KOH/g, auf. Die Hydroxylzahl (OH-Zahl) gibt an, wie viel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert
(DIN 53240-2). Im Falle reiner Poly-(Meth)-Acrylate kann die OH-Zahl auch durch Berechnung auf Basis der eingesetzten OH-funktionellen Monomere ausreichend genau bestimmt werden.

Die Glasübergangstemperaturen, gemessen mit Hilfe von DSC-Messungen nach DIN-EN-ISO 11357-2, der Polyole liegen bevorzugt zwischen -150 und 100 °C, besonders bevorzugt zwischen -120°C und 80°C.

Geeignete Polyesterpolyole sind beispielsweise in EP-A-0 994 117 und EP-A-1 273 640 beschrieben. Polyurethanpolyole werden vorzugsweise durch Umsetzung von Polyesterpolyol-Präpolymeren mit geeigneten Di- oder Polyisocyanaten hergestellt und sind beispielsweise in
EP-A-1 273 640 beschrieben. Geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Ganz besonders bevorzugt enthält die Komponente (A) ein oder mehrere Polyacrylatpolyole und/oder Polymethacrylatpolyole. Zusammen mit dem oder den Polyacrylatpolyolen und/oder Polymethacrylatpolyolen können weitere oligomere und/oder polymere Polyhydroxylgruppen-haltige Verbindungen, beispielsweise Polyesterpolyole, Polyurethanpolyole und Polysiloxanpolyole, insbesondere Polyesterpolyole, eingesetzt werden.

Die erfindungsgemäß ganz besonders bevorzugten Poly(meth)acrylatpolyole sind in der Regel Copolymerisate und weisen vorzugsweise massenmittlere Molekulargewichte Mw zwischen 1.000 und 20.000 Dalton, insbesondere zwischen 1.500 und 10.000 Dalton auf, jeweils gemessen mittels Gelpermeationschromatographie (GPC) gegen einen Polystyrolstandard.

Die Glasübergangstemperatur der Copolymerisate liegt in der Regel zwischen - 100 und 100 °C, insbesondere zwischen -50 und 80 °C (gemessen mittels DSC-Messungen nach DIN-EN-ISO 11357-2).

Die Poly(meth)acrylatpolyole weisen bevorzugt eine OH-Zahl von 60 bis 250 mg KOH/g, insbesondere zwischen 70 und 200 KOH/g, sowie eine Säurezahl zwischen 0 und 30 mg KOH/g auf.

Die Hydroxylzahl (OH-Zahl) wird wie oben beschrieben bestimmt (DIN 53240-2). Die Säurezahl gibt hierbei die Anzahl der mg Kaliumhydroxid an, die zur Neutralisation von 1 g der jeweiligen Verbindung verbraucht wird (DIN EN ISO 2114).

Als hydroxylgruppenhaltige Monomerbausteine werden bevorzugt Hydroxyalkylacrylate und/oder Hydroxyalkylmethacrylate, wie insbesondere 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat eingesetzt.

Als weitere Monomerbausteine werden für die Poly(meth)acrylatpolyole bevorzugt Alkylacrylate und/oder Alkylmethacrylate eingesetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.

Als weitere Monomerbausteine für die Poly(meth)acrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

### Die Polyisocyanatgruppen-haltigen Verbindungen (B)

Als Komponente (B) geeignet sind an sich bekannte substituierte oder unsubstituierte aromatische, aliphatische, cycloaliphatische und/oder heterocyclische Polyisocyanate. Beispiele für bevorzugte Polyisocyanate sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethylhexan-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur ® W der Fa. Bayer AG), Tetramethylxylyldiisocyanate (z.B. TMXDI ® der Fa. American Cyanamid) und Mischungen der vorgenannten Polyisocyanate. Bevorzugte Polyisocyanate sind auch die Biuret-Dimere und die Isocyanurat-Trimere der vorgenannten Diisocyanate. Besonders bevorzugte Polyisocyanate (B) sind Hexamethylen-1,6-diisocyanat, Isophorondiisocyanat und 4,4'-Methylendicyclohexyldiisocyanat, deren Biuret-Dimere und/oder deren Isocyanurat-Trimere und/oder deren asymmetrische Trimere, wie z:B. das im Handel unter der Bezeichnung Desmodur® N3900 erhältliche asymmetrische HDI-Trimer.

In einer weiteren Ausführungsform der Erfindung sind die Polyisocyanate Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in US-A-4, 598,131 beschrieben.

Die Polyisocyanatgruppen-haltige Komponente (B) kann in einem geeigneten Lösemittel (L) vorliegen. Geeignete Lösemittel (L) sind solche, die eine ausreichende Löslichkeit der Polyisocyanatkomponente ermöglichen und frei von gegenüber Isocyanaten reaktiven Gruppen sind. Beispiele für solche Lösemittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Butylal, 1,3-Dioxolan, Glycerolformal, Benzol, Toluol, Xylol, n-Hexan, Cyclohexan, Solventnaphtha®, 2-Methoxypropylacetat (MPA), und Ethylethoxypropionat.

### Hydroxylgruppenhaltige Verbindungen (C)

Die erfindungsgemäßen Beschichtungsmittelzusammensetzungen können ggf. außer der Polyhydroxylgruppen-haltigen Komponente (A) noch ein oder mehrere, von der Komponente (A) verschiedene, monomere hydroxylgruppenhaltige Verbindungen (C) enthalten. Bevorzugt nehmen diese Verbindungen (C) einen Anteil von 0 bis 20 Gew.-%, besonders bevorzugt von 1 bis 10 Gew.-%, ganz besonders bevorzugt von 1 bis 5 Gew.-%, jeweils bezogen auf den Bindemittelgehalt der Beschichtungsmittelzusammensetzung, ein.

Als hydroxylgruppenhaltige Verbindung (C) werden niedermolekulare Polyole eingesetzt.

Als niedermolekulare Polyole werden beispielsweise Diole, wie bevorzugt Ethylenglykol, Neopentylglykol, 1,2,-Propandiol, 2,2,-Dimethyl-1,3-Propandiol,1,4-Butandiol, 1,3-Butandiol, 1,5,-Pentandiol, 2,2,4-Trimethyl-1,3-pentandiol, 1,6-Hexandiol, 1,4-Cyclohexandimethanol und 1,2-Cyclohexandimethanol, sowie Polyole, wie bevorzugt Trimethylolethan, Trimethylolpropan, Trimethylolhexan, 1,2,4-Butantriol, Pentaerythritol sowie Dipentaerythritol, eingesetzt. Bevorzugt werden solche niedermolekularen Polyole in untergeordneten Anteilen der Polyolkomponente (A) beigemischt.

### Katalysator (D)

Es ist erfindungswesentlich, dass die Beschichtungsmittelzusammensetzung mindestens einen Katalysator (D) auf Basis eines Zink-Amidin-Komplexes enthält, der herstellbar ist durch Umsetzung von 1,0 Molen eines oder mehrerer Zink(II)biscarboxylate mit 0,1 bis 1,8 Molen eines Amidins der Formel (I) oder mit 0,1 bis 1,8 Molen einer Mischung aus zwei oder mehreren Amidinen der 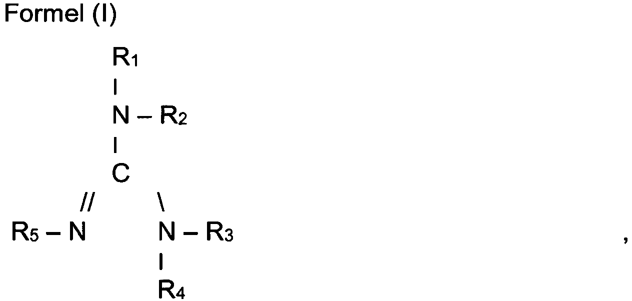 wobei R₅ = Wasserstoff und R₁, R₂, R₃, und R₄ jeweils gleiche oder verschiedene Reste sind, wobei R₁ und R₃ Wasserstoff oder ein Alkylrest oder ein Arylrest sind und R₂ und R₄ ein Alkylrest oder ein Arylrest sind.

Bevorzugt ist der Zink-Amidin-Komplex entweder herstellbar durch Umsetzung von 1,0 Molen eines oder mehrerer Zink(II)biscarboxylate mit 0,1 bis 1,5 Molen und besonders bevorzugt mit 0,5 bis 1,0 Molen eines Amidins der Formel (I) oder herstellbar durch Umsetzung von 1,0 Molen eines oder mehrerer Zink(II)-biscarboxylate mit 0,1 bis 1,5 Molen und besonders bevorzugt mit 0,5 bis 1,0 Molen einer Mischung aus zwei oder mehreren Amidinen der Formel (I).

Besonders bevorzugt ist der Katalysator (D) herstellbar durch Umsetzung von 1,0 Molen eines Zink(II)biscarboxylates mit 0,1 bis 1,8 Molen, besonders bevorzugt mit 0,1 bis 1,5 Molen und ganz besonders bevorzugt mit 0,5 bis 1,0 Molen eines Amidins der Formel (I).

Die Reste R₂ und R₄ sind bevorzugt gleiche oder verschiedene acyclische, geradkettige oder verzweigte Alkylreste und/oder gleiche oder verschiedene Arylreste. Bevorzugt sind die Reste R₁ und R₃ Wasserstoff oder gleiche oder verschiedene acyclische, geradkettige oder verzweigte Alkylreste und/oder gleiche oder verschiedene Arylreste. Die Alkylreste können jeweils ggf. vorliegen als Ester, Ether, Etherester und Ketone. Die Arylreste können substituiert sein mit aliphatischen Estern, Ethern, Etherestern und Ketonen oder als aromatische Ester, Ether, Etherester und Ketone vorliegen.

Besonders bevorzugt sind die Reste R₁, R₂, R₃, und R₄ jeweils gleiche oder verschiedene acyclische aliphatische Reste, ganz besonders bevorzugt weisen diese Reste R₁, R₂, R₃, und R₄ eins bis vier Kohlenstoffatome auf. Besonders bevorzugt sind die Reste R₁, R₂, R₃, und R₄ Methylreste.

Bevorzugte Zink-Amidin-Komplexe (D) sind außerdem solche, bei denen der Carboxylat-Rest des Zink-Amidin-Komplexes (D) ausgewählt ist aus der Gruppe der Carboxylat-Reste von aliphatischen linearen und/oder verzweigten, ggf. substituierten Monocarbonsäuren mit 1 bis 12 C-Atomen im Alkylrest und/oder von aromatischen, ggf. substituierten Monocarbonsäuren mit 6 bis 12 C-Atomen im Arylrest. Der Carboxylatrest bestimmt weitgehend die Löslichkeit des resultierenden Komplexes in den eingesetzten Lackkomponenten. Ganz besonders bevorzugt werden daher in den erfindungsgemäßen Beschichtungsmittelzusammensetzungen Zink-Amidin-Komplexe eingesetzt, die durch Umsetzung von 1,0 Molen Zink(II)bis(2-ethylhexanoat) mit 0,5 bis 1,5 Molen eines Amidins (I) erhältlich sind.

Besonders bevorzugt sind Beschichtungsmittelzusammensetzungen, die als Komponente (D) Zn(1,1,3,3-Tetramethylguanidin)ₓ(acetat)₂, Zn(1,1,3,3-Tetramethylguanidin)ₓ(formiat)₂, Zn(1,1,3,3-Tetramethylguanidin)ₓ(benzoat)₂, Zn(1,1,3,3-Tetramethylguanidin)ₓ(2-Ethylhexanoat)₂, Zn(1,1,3,3-Tetramethylguanidin)ₓ(octoat)₂, Zn(1,3-Diphenylguanidin)ₓ(formiat)₂, Zn(1,3-Diphenyl-guanidin)ₓ(acetat)₂, Zn(1,3-Diphenylguanidin)ₓ(benzoat)₂, Zn(1,3-Diphenyl-guanidin)ₓ(2-Ethylhexanoat)₂ und/oder Zn(1,3-Diphenylguanidin)ₓ(octoat)₂, bevorzugt Zn(1,1,3,3-Tetramethylguanidin)ₓ(2-Ethylhexanoat)₂und/oder Zn(1,1,3,3-Tetramethylguanidin)ₓ(octoat)₂ und/oder Zn(1,3-Diphenyl-guanidin)ₓ(2-Ethylhexanoat)₂ und/oder Zn(1,3-Diphenylguanidin)ₓ(octoat₎₂ enthalten, wobei jeweils x >= 2,5, insbesondere x = 3,0 bis 4,0, ist. Ganz besonders bevorzugt sind Beschichtungsmittelzusammensetzungen, die als Komponente (D) Zn(1, 1,3,3-Tetramethylguanidin)ₓ(2-Ethylhexanoat)₂ und/oder Zn(1, 1,3,3-Tetramethylguanidin)ₓ(octoat)₂ enthalten, wobei jeweils x <= 1,8 insbesondere x = 0,5 bis 1,5 ist.

Die Umsetzung des bzw. der Zink(II)biscarboxylate mit dem bzw. den Amidin(en) (I) erfolgt üblicherweise in einem Lösemittel. Als Lösemittel kommen hierbei insbesondere solche Lösemittel zum Einsatz, die eine ausreichende Löslichkeit der Zink(II)biscarboxylate und der Zink-Amidine ermöglichen und frei von gegenüber Isocyanaten reaktiven Gruppen sind. Beispiele für solche Lösemittel sind die bereits bei der Polyisocyanatgruppen-haltigen Verbindung (B) aufgeführten Lösemittel (L).

Die Umsetzung des bzw. der Zink(II)biscarboxylate mit dem bzw. den Amidin(en) (I) kann auch in der Polyhydroxylgruppen-haltigen Komponente (A) und/oder in den als Komponente (C) aufgeführten niedermolekularen Alkoholen, ggf. im Gemisch mit weiteren Lösemitteln - wie insbesondere den gerade aufgeführten Lösemitteln (L) - erfolgen.

Es ist auch möglich, die Umsetzung des bzw. der Zink(II)biscarboxylate mit dem bzw. den Amidin(en) (I) in der Gesamtmischung der Lackkomponente (K-I), enthaltend die hydroxylgruppenhaltigen Verbindungen (A) und ggf. (C), ggf. das Lösemittel und ggf. ein oder mehrere der unten aufgeführten Lackadditive (F), durchzuführen.

Die Umsetzung des bzw. der Zink(II)biscarboxylate mit dem bzw. den Amidin(en) (I) erfolgt üblicherweise bei Raumtemperatur oder leicht erhöhter Temperatur von bis zu 100°C. Dabei wird in der Regel das Zink(II)biscarboxylat in dem Lösemittel bzw. der hydroxylgruppenhaltigen Verbindung (A) und/oder (C) - wie gerade beschrieben - vorgelegt und die Amidinverbindung, ggf. gelöst in einem der genannten Lösemittel, langsam zugetropft. Die entstehende Wärmeentwicklung wartet man ab und rührt dann die Mischung noch weiter 2 Stunden bei mindestens 60°C.

Zusätzlich ist es möglich, insbesondere dann, wenn es sich bei den Beschichtungsmittelzusammensetzungen um 2-komponentige Beschichtungsmittelzusammensetzungen handelt, die aktive Katalysatorverbindung (D) in situ herzustellen. Dazu wird eine entsprechende Menge des Amidins oder der Amidine in der das hydroxylgruppenhaltige Bindemittel (A) und ggf. (C) enthaltenden Lackkomponente (K-I) und eine entsprechende Menge des Zink(II)biscarboxylates in der die Polyisocyanatgruppen-haltige Verbindung (B) enthaltenden Lackkomponente (K-II) gelöst. Beim Mischen der beiden Lackkomponenten vor der Applikation wird dann der Zink-Amidin-Komplex in-situ in der Beschichtungsmittelzusammensetzung gebildet.

### Monomere Aromatische Carbonsäure (S)

Zur weiteren Verbesserung der Montagefestigkeit der Beschichtungen ist es ferner erfindungswesentlich, dass die Beschichtungsmittelzusammensetzung mindestens eine monomere aromatische, ggf. substituierte Carbonsäure (S) enthält, deren Carboxylgruppe in Konjugation zu einem π-Elektronensystem steht. Dabei kann die Anzahl der Carboxylgruppen variieren, wobei die Carbonsäuren bevorzugt eine Carboxylgruppe aufweisen. Bevorzugt weisen die monomeren aromatischen, ggf. substituierten Carbonsäuren ein Molekulargewicht < 500 g/mol, besonders bevorzugt < 300 g/mol, auf. Bevorzugt werden monomere aromatische, ggf. substituierte Carbonsäuren eingesetzt, die einen pKs-Wert von 2 bis 5 aufweisen. Der pKs-Wert entspricht dem pH-Wert am Halbäquivalentspunkt, wobei das Lösungsmedium vorzugsweise Wasser ist. Sollte für eine Säure die Angabe eines pKs-Wertes in Wasser nicht möglich sein, so wird als Medium vorzugsweise DMSO gewählt oder aber ein anderes geeignetes Medium, in dem die Säure löslich ist.

Geeignet sind monomere aromatische Mono- und Polycarbonsäuren, die entsprechenden Alkyl- und Aryl-substituierten aromatischen Mono- und Polycarbonsäuren sowie die entsprechenden hydroxylgruppenhaltigen aromatischen Mono- und Polycarbonsäuren, wie beispielsweise Phthalsäure und Terephthalsäure, Alkyl- bzw. Aryl-substituierte Phthalsäure und Terephthalsäure, Benzoesäure und Alkyl- bzw. Aryl-substituierte Benzoesäure, aromatische Carbonsäuren mit weiteren funktionellen Gruppen wie Salicylsäure und Acetylsalicylsäure, Alkyl- bzw. Aryl-substituierte Salicylsäure oder Isomere davon, mehrkernige aromatische Carbonsäuren, wie die Isomeren der Naphthalincarbonsäure und deren Derivate.

Bevorzugt enthält die Beschichtungsmittelzusammensetzung als monomere aromatische Carbonsäure (S) Benzoesäure, tert.-Butylbenzoesäure, 3,4-Dihydroxybenzoesäure, Salicylsäure und/oder Acetylsalicylsäure, besonders bevorzugt Benzoesäure.

### Die Kombination der Komponenten (A), (B), ggf. (C), (D) und (S) sowie weitere Komponenten der Beschichtungsmittelzusammensetzungen

Handelt es sich um einkomponentige Beschichtungsmittelzusammensetzungen, so werden Polyisocyanatgruppen-haltige Verbindungen (B) gewählt, deren freie Isocyanatgruppen mit Blockierungsmitteln blockiert sind. Beispielsweise können die Isocyanatgruppen mit substituierten Pyrazolen, insbesondere mit Alkyl-substituierten Pyrazolen, wie 3-Methylpyrazol, 3,5-Dimethylpyrazol, 4-Nitro-3,5-dimethypyrazol, 4-Bromo-3,5-dimethylpyrazol u. Ä. blockiert werden. Besonders bevorzugt werden die Isocyanatgruppen der Komponente (B) mit 3,5-Dimethylpyrazol blockiert.

Bei den erfindungsgemäß besonders bevorzugten 2-komponentigen (2K) Beschichtungsmittelzusammensetzungen wird kurz vor der Applikation des Beschichtungsmittels eine Lackkomponente, enthaltend die Polyhydroxylgruppen-haltige Verbindung (A) sowie weitere nachfolgend beschriebene Komponenten, mit einer weiteren Lackkomponente, enthaltend die Polyisocyanatgruppen-haltige Verbindung (B) sowie gegebenenfalls weitere der nachfolgend beschriebenen Komponenten in an sich bekannter Weise vermischt, wobei in der Regel die Lackkomponente, die die Verbindung (A) enthält, den Katalysator (D) sowie einen Teil des Lösemittels enthält.

Die Polyhydroxykomponente (A) kann in einem geeigneten Lösemittel vorliegen. Geeignete Lösemittel sind solche, die eine ausreichende Löslichkeit der Polyhydroxykomponente ermöglichen. Beispiele für solche Lösemittel sind die bereits bei der Polyisocyanatgruppen-haltigen Verbindung (B) aufgeführten Lösemittel (L).

Die Gewichtsanteile des Polyols (A) und ggf. (C) und des Polyisocyanates (B) werden vorzugsweise solchermaßen gewählt, dass das molare Äquivalentverhältnis der Hydroxylgruppen der Polyhydroxylgruppen-haltigen Verbindung (A) plus ggf. (C) zu den Isocyanatgruppen der Komponente (B) zwischen 1:0,9 und 1:1,5, bevorzugt zwischen 1:0,9 und 1:1,1 besonders bevorzugt zwischen 1:0,95 und 1:1,05, liegt.

Bevorzugt werden erfindungsgemäß Beschichtungsmittelzusammensetzungen eingesetzt, die von 30 bis 80 Gew.-%, bevorzugt von 50 bis 70 Gew.-%, jeweils bezogen auf den Bindemittelgehalt der Beschichtungsmittelzusammensetzung, mindestens einer Polyhydroxylgruppen-haltigen Verbindung (A), insbesondere mindestens eines Polyhydroxylgruppen-haltigen Polyacrylates (A) und/oder mindestens eines Polyhydroxylgruppen-haltigen Polymethacrylates (A), enthalten.

Ebenfalls bevorzugt werden erfindungsgemäß Beschichtungsmittelzusammensetzungen eingesetzt, die von 5 bis 50 Gew.-%, bevorzugt von 25 bis 40 Gew.-%, jeweils bezogen auf den Bindemittelgehalt der Beschichtungsmittelzusammensetzung, der Polyisocyanatgruppen-haltigen Verbindung (B) enthalten.

Bevorzugt enthalten die erfindungsgemäßen Beschichtungsmittelzusammensetzungen außerdem mindestens einen Zink-Amidin-Komplex (D) in einer solchen Menge, dass der Metallgehalt des Zink-Amidin-Komplexes, jeweils bezogen auf den Bindemittelgehalt der Beschichtungsmittelzusammensetzung, zwischen 35 und 2000 ppm, bevorzugt zwischen 35 und 1000 ppm und besonders bevorzugt zwischen 100 und 1000 ppm, liegt.

Bevorzugt enthalten die erfindungsgemäßen Beschichtungsmittelzusammensetzungen außerdem 0 bis 15,0 Gew.-%, bevorzugt 0,2 bis 8,0 Gew.-% und besonders bevorzugt 0,5 bis 5,0 Gew.-%, mindestens einer aromatischen Carbonsäure (S), wobei die Gew.-%-Angaben jeweils bezogen sind auf den Bindemittelgehalt der Beschichtungsmittelzusammensetzung.

Unter Bindemittelanteil ist jeweils der in Tetrahydrofuran (THF) lösliche Anteil der Beschichtungsmittelzusammensetzung vor der Vernetzung zu verstehen. Dazu wird eine kleine Probe (P) gewogen, in der 50- bis 100-fachen Menge THF gelöst, unlösliche Bestandteile werden abfiltriert, das THF abgedamft und daran anschließend der Festkörper der zuvor in THF gelösten Bestandteile bestimmt, indem für 60 Minuten bei 130°C getrocknet wird, im Exsikkator abgekühlt wird und dann erneut gewogen wird. Der Rückstand entspricht dem Bindemittelgehalt der Probe (P).

Die erfindungsgemäßen Beschichtungsmittelzusammensetzungen sind bevorzugt nichtwässrige Beschichtungsmittel und können Lösemittel enthalten oder als lösemittelfreie Systeme formuliert sein. Beispiele für geeignete Lösemittel sind die bereits bei der Polyhydroxylgruppen-haltigen Verbindung (A) und ggf. (C) und bei der Polyisocyanatgruppen-haltigen Verbindung (B) aufgeführten Lösemittel (L). Das bzw. die Lösemittel werden in den erfindungsgemäßen Beschichtungsmittelzusammensetzungen bevorzugt in einer solchen Menge eingesetzt, dass der Festkörpergehalt der Beschichtungsmittelzusammensetzung mindestens 50 Gew.-%, besonders bevorzugt mindestens 60 Gew.-% beträgt.

Weiterhin können die erfindungsgemäßen Beschichtungsmittelzusammensetzungen 0 bis 30 Gew.-%, bevorzugt 0 bis 15 Gew.-%, jeweils bezogen auf den Bindemittelgehalt der Beschichtungsmittelzusammensetzung, eines oder mehrerer Aminoplastharze und/oder eines oder mehrerer Tris(Alkoxycarbonylamino)Triazine (E) enthalten.

Beispiele für geeignete Tris(Alkoxycarbonylamino)Triazine sind in der US-A-4 939 213, der US-A- 5 084 541 und der EP-A-0 624 577 genannt.

Beispiele für geeignete Aminoplastharze (E) sind alle im Bereich der Lackindustrie üblicherweise eingesetzten Aminoplastharze, wobei über die Reativität des Aminoplastharzes die Eigenschaften der resultierenden Beschichtungsmittel gesteuert werden können. Es handelt sich um Kondensationsprodukte aus Aldehyden, insbesondere Formaldehyd, und beispielsweise Harnstoff, Melamin, Guanamin und Benzoguanamin. Die Aminoplastharze enthalten Alkohol-, vorzugsweise Methylolgruppen, die in der Regel teilweise oder bevorzugt vollständig mit Alkoholen verethert sind. Es werden insbesondere mit niedrigen Alkoholen veretherte Aminoplastharze eingesetzt. Bevorzugt werden mit Methanol und/oder Ethanol und/oder Butanol veretherte Aminoplastharze, beispielsweise in dem Handel unter den Bezeichnungen Cymel®, Resimene®, Maprenal® und Luwipal® erhältlichen Produkte, eingesetzt.

Die Aminoplastharze (E) sind altbekannte Verbindungen und werden beispielsweise im Detail in der amerikanischen Patentanmeldung US 2005/0182189 A1, Seite 1, Absatz [0014], bis Seite 4, Absatz [0028], beschrieben.

Darüber hinaus kann die erfindungsgemäße Bindemittelmischung bzw. die erfindungsgemäße Beschichtungsmittelzusammensetzung mindestens ein übliches und bekanntes Lackadditiv (F) in wirksamen Mengen, d.h. in Mengen vorzugsweise bis zu 30 Gew.-%, besonders bevorzugt bis zu 25 Gew.-% und insbesondere bis zu 20 Gew.-%, jeweils bezogen auf den Bindemittelgehalt der Beschichtungsmittelzusammensetzung, enthalten.

Beispiele geeigneter Lackadditive (F) sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- von den Komponenten (A) und (C) verschiedene Reaktivverdünner, insbesondere Reaktivverdünner, die erst durch Reaktion mit weiteren Bestandteilen bzw. Wasser reaktiv werden, wie beispielsweise Incozol® oder Asparaginsäureester
- von den Komponenten (A) und (C) verschiedene Netzmittel wie Siloxane, fluorhaltige Verbindungen, Carbonsäurehalbester, Phosphorsäureester, Polyacrylsäuren und deren Copolymere oder Polyurethane;
- Haftvermittler;
- Verlaufsmittel;
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- von den Komponenten (A) und (C) verschiedene rheologiesteuernde Additive, wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile®; oder synthetische Polymere mit ionischen und/oder assoziativ wirkenden Gruppen wie Poly(meth)acrylamid, Poly(meth)acrylsäure, Polyvinylpyrrolidon, Styrol-Maleinsäureanhydrid- oder Ethylen-Maleinsäure-anhydrid-Copolymere und ihre Derivate oder hydrophob modifizierte ethoxylierte Urethane oder Polyacrylate;
- Flammschutzmittel.

Besonders bevorzugt sind Beschichtungsmittelzusammensetzungen, die 50 bis 70 Gew.-%, bezogen auf den Bindemittelgehalt der Beschichtungsmittelzusammensetzung, mindestens eines Polyhydroxylgruppen-haltigen Polyacrylates (A) und/oder mindestens eines Polyhydroxylgruppen-haltigen Polymethacrylates (A),
25 bis 40 Gew.-%, bezogen auf den Bindemittelgehalt der Beschichtungsmittelzusammensetzung, der Polyisocyanatgruppen-haltigen Verbindung (B)

0 bis 10 Gew.-%, bezogen auf den Bindemittelgehalt der Beschichtungsmittelzusammensetzung, der hydroxylgruppen-haltigen Komponente (C)
0,5 bis 5,0 Gew.-%, bezogen auf den Bindemittelgehalt der Beschichtungsmittelzusammensetzung, mindestens einer aromatischen Carbonsäure (S)
0 bis 15 Gew.-%, bezogen auf den Bindemittelgehalt der Beschichtungsmittelzusammensetzung, eines oder mehrerer Aminoplastharze und/oder eines oder mehrerer Tris(Alkoxycarbonylamino)Triazine (E) und
0 bis 20 Gew.-%, bezogen auf den Bindemittelgehalt der Beschichtungsmittelzusammensetzung, mindestens eines üblichen und bekannten Lackadditivs (F) und
mindestens einen Zink-Amidin-Komplex (D) in einer solchen Menge enthalten, dass der Metallgehalt des Zink-Amidin-Komplexes, jeweils bezogen auf den Bindemittelgehalt der Beschichtungsmittelzusammensetzung, zwischen 100 und 1000 ppm liegt.

In einer weiteren Ausführungsform der Erfindung kann die erfindungsgemäße Bindemittelmischung bzw. die erfindungsgemäße Beschichtungsmittelzusammensetzung noch weitere Pigmente und/oder Füllstoffe enthalten und zur Herstellung pigmentierter Topcoats bzw. pigmentierter Undercoats oder Füller, insbesondere pigmentierter Topcoats, dienen. Die dafür eingesetzten Pigmente und/oder Füllstoffe sind dem Fachmann bekannt. Die Pigmente werden üblicherweise in einer solchen Menge eingesetzt, dass das Pigment-zu-Bindemittel-Verhältnis zwischen 0,05 : 1 und 1,5 : 1 liegt, jeweils bezogen auf den Bindemittelgehalt der Beschichtungsmittelzusammensetzung.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung und/oder für die Beschichtung von Automobilanbauteilen und/oder die Beschichtung von Nutzfahrzeugen.

Die Applikation der erfindungsgemäßen Beschichtungsmittelzusammensetzungen kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 20 bis 200°C während einer Zeit von 1 min bis zu 10 h, wobei bei niedrigen Temperaturen auch längere Härtezeiten zur Anwendung kommen können. Für die Automobilreparaturlackierung und für die Lackierung von Kunststoffteilen sowie die Lackierung von Nutzfahrzeugen werden dabei üblicherweise niedrigere Temperaturen angewandt, die bevorzugt zwischen 20 und 80°C, insbesondere zwischen 20 und 60°C liegen.

Die erfindungsgemäßen Beschichtungsmittelzusammensetzungen eignen sich hervorragend als dekorative, schützende und/oder effektgebende, Beschichtungen und Lackierungen von Karosserien von Fortbewegungsmitteln (insbesondere Kraftfahrzeuge, wie Fahrräder, Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Die erfindungsgemäßen Beschichtungsmittelzusammensetzungen können daher beispielsweise auf ein ggf. vorbeschichtetes Substrat aufgebracht werden, wobei die erfindungsgemäßen Beschichtungsmittel sowohl pigmentiert als auch unpigmentiert sein können. Insbesondere werden die erfindungsgemäßen Beschichtungsmittelzusammensetzungen und Lackierungen, insbesondere die Klarlackierungen, in dem technologisch und ästhetisch besonders anspruchsvollen Gebiet der Automobilserienlackierung (OEM) und zur Beschichtung von Kunststoff-Anbauteilen für Pkw-Karosserien, insbesondere für Karosserien von Pkw der Oberklasse, wie z. B. für die Herstellung von Dächern, Heckklappen, Motorhauben, Kotflügeln, Stoßstangen, Spoilern, Schwellern, Schutzleisten, seitlichen Verkleidungen u.Ä., sowie der Automobilreparaturlackierung und der Lackierung von Nutzfahrzeugen, wie beispielsweise von Lastkraftfahrzeugen, kettenbetriebenen Baufahrzeugen, wie z.B. Kranfahrzeugen, Radladern und Betonmischern, Omnibussen, Schienenfahrzeugen, Wasserfahrzeugen, Fluggeräten sowie landwirtschaftlichen Geräten wie Traktoren und Mähdreschern, und Teilen hiervon eingesetzt.

Die Kunststoffteile bestehen üblicherweise aus ASA, Polycarbonaten, Blends aus ASA und Polycarbonaten, Polypropylen, Polymethylmethacrylaten oder schlagzäh modifizierte Polymethylmethacrylaten, insbesondere aus Blends aus ASA und Polycarbonaten, bevorzugt mit einem Polycarbonatanteil > 40%, insbesondere > 50%, verwendet.

Unter ASA werden dabei im Allgemeinen schlagzähmodifizierte Styrol/-Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen.

Besonders bevorzugt werden die erfindungsgemäßen Beschichtungsmittelzusammensetzungen in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit der erfindungsgemäßen Beschichtungsmittelzusammensetzung aufgetragen werden. Gegenstand der Erfindung sind daher auch effekt- und/oder farbgebende Mehrschichtlackierungen aus mindestens einer pigmentierten Basislackschicht und mindestens einer darauf angeordneten Klarlackschicht, die dadurch gekennzeichnet sind, dass die Klarlackschicht aus der erfindungsgemäßen Beschichtungsmittelzusammensetzung hergestellt worden ist.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff. angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird die erfindungsgemäße Beschichtungsmittelzusammensetzung aufgebracht. Anschließend wird die Zweischichtlackierung bevorzugt unter bei der Automobilserienlackierung angewandten Bedingungen bei Temperaturen von 20 bis 200°C während einer Zeit von 1 min bis zu 10 h eingebrannt, wobei bei den für die Automobilreparaturlackierung angewandten Temperaturen, die im Allgemeinen zwischen 20 und 80°C, insbesondere zwischen 20 und 60°C liegen, auch längere Härtzeiten zur Anwendung kommen können.

In einer weiteren bevorzugten Ausführungsform der Erfindung wird die erfindungsgemäße Beschichtungsmittelzusammensetzung als transparenter Klarlack zur Beschichtung von Kunststoffsubstraten, insbesondere von Kunststoff-Anbauteilen, eingesetzt. Die Kunststoffanbauteile werden bevorzugt ebenfalls in einem mehrstufigen Beschichtungsverfahren beschichtet, bei dem auf ein gegebenenfalls vorbeschichtetes oder ein zur besseren Haftung der nachfolgenden Beschichtungen vorbehandeltes Substrat (z.B. Beflammen, Corona- oder Plasma-Behandlung des Substrats) zunächst eine pigmentierte Basislackschicht und danach eine Schicht mit der erfindungsgemäßen Beschichtungsmittelzusammensetzung aufgetragen werden.

### Beispiele

### Gelpermeationschromatographie (GPC)

Die Gelpermeationschromatographie wurde bei 40°C mit einer Hochdruckflüssigkeitschromatographie-Pumpe und einem Brechungsindexdetektor durchgeführt. Als Elutionsmittel wurde Tetrahydrofuran mit einer Elutionsgeschwindigkeit von 1 mL/min verwendet. Die Kalibrierung wurde mittels Polystyrol-Standards durchgeführt. Das zahlenmittlere Molekulargewicht Mn, das gewichtsmittlere Molekulargewicht Mw und Mp wurden bestimmt, wobei sich der Polymolekularitätsindex Mp berechnet aus Mp = Mw/Mn.

### Hydroxylzahl

Die Hydroxylzahl wird über den eingesetzten Anteil an OH-funktionellen Komponenten berechnet und in mg KOH pro Gramm Festharz angegeben.

### Festkörperbestimmung

Ca. 1 g Probe werden in einem Weißblechdeckel eingewogen. Nach Zugabe von ca. 3 ml Butylacetat wird die Probe im Trockenschrank für 60 Minuten bei 130°C getrocknet, im Exsikkator abgekühlt, und dann zurückgewogen. Der Rückstand entspricht dem Festkörperanteil.

### Bindemittelgehaltbestimmung

Unter Bindemittelanteil ist jeweils der in Tetrahydrofuran (THF) lösliche Anteil der Beschichtungsmittelzusammensetzung vor der Vernetzung zu verstehen. Dazu wird eine kleine Probe (P) gewogen, in der 50- bis 100-fachen Menge THF gelöst, unlösliche Bestandteile werden abfiltriert, das THF abgedampft und daran anschließend der Festkörper der zuvor in THF gelösten Bestandteile bestimmt, indem für 60 Minuten bei 130°C getrocknet wird, im Exsikkator abgekühlt wird und dann erneut gewogen wird. Der Rückstand entspricht dem Bindemittelgehalt der Probe (P).

### Klebfreiheit mittels Zapon-Tack Test (ZTT):

Ein Aluminiumstreifen mit einer Dicke von ca. 0,5 mm, einer Breite von 2,5 cm und einer Länge von ca. 11 cm wird so in einem 110° Winkel gebogen, dass eine Fläche von 2,5 X 2,5 cm entsteht. Die lange Seite des Bleches wird nach weiteren 2,5 cm um ca. 15° so gebogen, dass das Blech durch ein auf der quadratischen Fläche zentriert platziertes Gewicht von 5 g gerade in Balance gehalten wird. Zur Messung der Klebfreiheit nach ZTT wird das gebogene Blech auf dem Lackfilm platziert und für 30 s mit einem Gewicht von 100g beschwert. Nach Entfernung des Gewichtes wird der Lack als klebfrei angesehen, wenn der Blechwinkel innerhalb von 5 s umfällt. Der Test wird in Abständen von 15 Minuten wiederholt. Vor Einsatz des Tests wird die Klebrigkeit des Lackfilms qualitativ durch Berührung beurteilt. Bei Prüfungen mit erhöhter Temperatur werden die Prüftafeln vor Beginn der Prüfung zur Abkühlung 10 Minuten bei Raumtemperatur gelagert.

### Print-Test:

Der Lackfilm wird mittels 100µm-Rakel auf eine Glastafel aufgezogen. Nach Trocknung 15 Minuten bei 60°C wird innerhalb von 10 Minuten nach Entnahme aus dem Ofen die Glastafel auf eine handelsüblichen Laborwaage aufgelegt. Mittels Daumendruck wird der Film dann für 20 s mit einem Gewicht von 2 kg belastet. Diese Prüfung wird alle 10 Minuten wiederholt. Bei offensichtlich noch weichem oder klebrigem Lackfilm wird zunächst abgewartet, bis der Lackfilm eine ausreichende Klebfreiheit und Härte erreicht hat. Die Auswertung der Versuche wird nach einer Lagerzeit von 24 Stunden vorgenommen. Dazu wird die Lackoberfläche mit einer wässrigen Tensidlösung (handelsübliches Spülmittel) und einem weichen Tuch abgewaschen um Fettmarkierungen zu eliminieren. Es wird immer gegen einen Standard gemessen. Der Lack wird als in Ordnung angesehen, wenn kein Daumenabdruck auf dem Lackfilm sichtbar ist. Diese Prüfung ist ein Maß für die Montagefestigkeit von Reparaturlackierungen, d.h. je früher der Lackfilm seine Montagefestigkeit nach forcierter Trocknung erreicht hat, um so eher kann mit Montagearbeiten (bzw. Demontagearbeiten von Abklebungen) an der reparierten Karosserie begonnen werden.

### Drying recorder:

Auf Glastafeln der Dimension 280 mm x 25 mm wird der Lack mit Hilfe eines 100µ Kastenrakels aufgezogen. Mit Hilfe des Byk-Dry-time Recorders werden bei Raumtemperatur (20 - 23°C) und einer relativen Luftfeuchte von 40 bis 60% Nadeln mit einer definierten Geschwindigkeit über den Film gezogen. Dabei werden 3 verschiedene Phasen sowie die Gesamtlänge (=summe aus
Phase1 + Phase 2 + Phase 3) der Spur beurteilt.
Phase 1: Die Nadelspur läuft wieder zu
Phase 2: Die Nadelspur führt zu eine tiefgehenden Furche im Lackfilm
Phase 3: Die Nadel verletzt den Film nur oberflächlich

Die Beurteilung wird immer gegen einen Standard vorgenommen.

### Potlife:

Dazu wird die Viskosität bei Raumtemperatur einer Lackprobe im DIN4 Auslaufbecher gemessen. Zuvor wird die Probe auf eine Auslaufviskosität von 19 - 20 Sekunden im DIN4 Becher eingestellt. Danach wird in geeigneten Zeitabständen der Viskositätsanstieg bestimmt. Sobald die Probe ihre Anfangsviskosität verdoppelt hat, ist das Potlife-Limit erreicht.

### Pendelhärte:

Die Härte der Lackfilme wird mittels Pendeldämpfung nach Koenig gemäß DIN 53157 bestimmt. Angegeben sind die Pendelschläge.

### WOM-Test (Vergilbung)

Auf 2 Prüftafeln wird ein handelsüblicher 2K-PUR Autoreparaturfüller und darauf ein Glasurit Wasserbasislack der Reihe 90 der Firma BASF Coatings GmbH, Farbton Silber, mit dem zu prüfenden Klarlack des Beispiels 1 und des Vergleichsbeispiels V2 mit einer Schichtdicke von 30 - 40 µm beschichtet. Eine dieser Prüftafeln wird nach der Norm SAE J2527 -04 (WOM-Test) bewittert. Nach zuvor festgelegten Zeitabständen wird die Tafel aus dem Bewitterungsgerät entnommen, vermessen mit dem Mehrwinkelfarbmessgerät BYK-mac Firma BYK-Gardner GmbH, D-82538 Geretsried und Berechnung nach DIN 6174 mit Absolutwerten und wiederum im Bewitterungsgerät belastet. Die Vergilbung wird beurteilt gegen eine mitlaufende Standard-Beschichtung auf Basis Zinn enthaltender Katalysatoren.

### Stammlack:

86,4g eines styrolhaltigen Polyacrylates (62%ig in Solventnaptha®/Ethoxyethylpropionat/Methylisobutylketon (20/46/34)) mit einem Molekulargewicht von 1600 - 2200 (Mn) und 4000 - 5000 (Mw), einer gemessenen Säurezahl von 12-16 mg KOH/g, einer berechneten OH-Zahl (OHZ) von ca 130 mg KOH/g (Festharz) und einer Viskosität der 60%igen Lösung in Butylacetat von 200 - 400 mPa.s, gemessen mit einem Rotationsviskosimeter (Brookfield CAP 2000, Spindel 3, 1000RPM), werden mit 6,4 g Methylisobutylketon, 2,2 g eines handelsüblichen Lichtschutzmittelgemisches bestehend aus UV- und HALS Lichtschutzmittel sowie 0,15 g eines handelsüblichen Verlaufsmittels auf Basis eines Polyacrylates zu einer homogenen Mischung verrührt. Zu dieser Mischung wird, sofern angegeben, der entsprechende Katalysator unter Rühren zugemischt. Bei Einsatz von Benzoesäure wird diese unter Rühren als Feststoff im Stammlackgemisch aufgelöst. Zur Viskositätseinstellung werden nochmals 1,0 Teile Methylisobutylketon und 2,80 Teile Butylacetat zugesetzt.

### Härterlösung:

In einer Mischung von 5,17 Teilen Xylol, 7,48 Teilen Butylacetat, 1,506 Teilen Ethylethoxypropionat, 7,03 Teilen Methylisobutylketon sowie 0,3 Teilen eines handelsüblichen Verlaufsmittels auf Basis eine Polyacrylates (55%ig in Solventnaphtha®) werden 28,1 g trimerisiertes, Isocyanuratgruppen aufweisendes Hexamethylendiisocyanat (HDI) mit einem Isocyanatgehalt von 22,0 %, bezogen auf das lösemittelfreie trimerisierte Hexamethylendiisocyanat, gelöst.

### Katalysatoren:

### Katalysator K1

60,27 g Zink(II)-bis(2ethylhexanoat) (0,171 mol) werden in 20,0g Butylacetat gelöst. Dazu lässt man langsam 19,73 g 1,1,3,3 Tetramethylguanidin (0,171 mol) zutropfen. Nach Abklingen der exothermen Reaktion wird noch weitere 20 Minuten bei RT°C gerührt.

### Katalysator K2

48,34 g Zink(II)-bis(2ethylhexanoat) (0,137 mol) werden in 20 g Butylacetat gelöst. Dazu lässt man langsam 31,656 g 1,1,3,3 Tetramethylguanidin (0,275 mol) zutropfen. Nach Abklingen der exothermen Reaktion wird noch weitere 20 Minuten bei RT°C gerührt.

### Versuchsdurchführung:

Zusätzliche Komponenten wie Benzoesäure und Katalysatorlösungen werden im Stammlack aufgelöst. Nach leichtem Rühren erhält man klare Lösungen. Zur Versuchsdurchführung wird der Stammlack vorgelegt und der Härter zugegeben. Die Lösung wird durch Rühren homogenisiert.
Für die Viskositätsmessungen wird auf die angegebene Viskosität durch Lösemittelzugabe eingestellt.
Für die Glasaufzüge verzichtet man auf die Einstellung der Viskosität.
Zur Trocknungsprüfung wird der Lackfilm auf Glastafeln mittels eines 100 µm Kastenrakels aufgezogen, so dass eine Filmschichtdicke von 30 - 35 µm erreicht wird. Für die Prüfung der Pendelhärte wird der Film auf Glastafeln aufgegossen, vor Bestimmung der Filmhärte nach Koenig wird die Schichtdicke des aufgezogenen Films am Ritz (DIN 50933) bestimmt. Für die Prüfungen mittels Drying Recorder werden die Proben ebenfalls mit einem 100 µm Kastenrakel auf geeignete Glasstreifen von ca 300 mm Länge und ca 25 mm Breite aufgezogen; die damit erreichten Schichtdicken liegen bei 30 - 35 µm.

### Beispiele 1 und 2 sowie Vergleichsbeispiele V1 und V2

Zunächst wurden die Beschichtungsmittel der Beispiele 1 und 2 mit gleicher Menge an gleichem Zink-Amidin-Komplex, aber einmal mit Benzoesäure (Beispiel 1) und einmal ohne Benzoesäure (Beispiel 2, nicht erfindungsgemäß) hergestellt. Im Vergleichsbeispiel V1 wurde zunächst eine Beschichtungsmittelzusammensetzung auf Basis zinnhaltiger Katalysatoren hergestellt. Weiterhin wurde das Beschichtungsmittel des Vergleichsbeispiels V2 analog der WO06/022899 mit dem Zn(1,1,3,3-Tetramethylguanidin)₂(2-Ethylhexanoat)₂-Komplex und ohne aromatische Carbonsäure hergestellt. Die Zusammensetzung dieser Beschichtungsmittel der Beispiele 1 und 2 und der Vergleichsbeispiele V1 und V2 sowie die Prüfergebnisse der resultierenden Beschichtungen sind in Tabelle 1 dargestellt.

**Tabelle 1: Zusammensetzung der Beschichtungsmittel der Beispiele 1 und 2 und der Vergleichsbeispiele V1 und V2 sowie die Prüfergebnisse der resultierenden Beschichtungen**

| | **E1** | **E2** (nicht erfindungsgemäß) | **V1** | **V2** |
|---|---|---|---|---|
| Stammlack | 98,97 | 98,97 | 98,97 | 98,97 |
| DIBUTYLZINNDILAURAT | | | 0,06 | |
| Benzoesäure | 2,41 | | 1,5 | |
| Katalysator K2 | | | | 0,25 |
| Katalysator K1 | 0,2 | 0,2 | | |
| Härterlösung | 49,58 | 49,58 | 49,58 | 49,58 |
| Metallgehalt 1) [ppm] | 275 | 275 | 140 | 275 |
| **Potlife DIN 4 [s]²⁾** | | | | |
| direkt | 19 | 21 | 19 | 21 |
| nach 1h | 24 | 25 | 23 | 26 |
| nach 2h | 31 | 32 | 36 | 30 |
| nach 3h | 51 | 37 | 78 | 39 |
| **ZAPON-Tack** | | | | |
| 30'60°C/ 10'RT [min] ³⁾ | 15 | 265 | 0 | 280 |
| **Pendeldämpfung** | | | | |
| 23°C RT nach 1d 4) | 94 | 72 | 39 | 74 |
| 23°C RT nach 7d ⁴⁾ | 134 | 138 | 69 | 133 |
| 30'60°C nach 1d ⁵⁾ | 98 | 95 | 64 | 112 |
| 30'60°C nach 7d ⁵⁾ | 145 | 149 | 83 | 148 |
| **Drying Recorder ⁶⁾** | | | | |
| Gesamtlänge [cm] | 17,3 | 26,6 | 17,2 | 25,2 |
| Phase 1 [cm] | 5,5 | 7 | 4,4 | 6,9 |
| Phase 2 [cm] | 7 | 12,1 | 6,5 | 11,2 |
| Phase 3 [cm] | 4,8 | 7,1 | 6,3 | 7,1 |
| **Print - Test - 15 min 60°C /10** | | | | |
| **min RT ⁷⁾** [min] | | | | |
| | 60 | 340 | 80 | 340 |

### Erläuterungen zu Tabelle 1

1) angegeben ist die Katalysatormenge K1 bzw. K2 in ppm Metallgehalt, bezogen auf den Bindemittelanteil der Beschichtungsmittelzusammensetzung
2) angegeben ist die im DIN4 Auslaufbecher bei Raumtemperatur gemessene Viskosität der Beschichtungsmittelzusammensetzung direkt nach Herstellung sowie nach 1, 2, und 3 Stunden nach dessen Herstellung
3) Messung der Klebfreiheit mit dem Zapon-Tack Test nach Härtung der Beschichtung 30 min bei 60°C und Beginn der Prüfung nach Lagerung der Tafeln für 10 Minuten bei Raumtemperatur
4) Messung der Pendelhärte nach Lagerung der Beschichtung 1 bzw. 7 Tage bei Raumtemperatur
5) Messung der Pendelhärte nach Härtung der Beschichtung für 30 min bei 60°C und anschließende Lagerung der Beschichtung 1 bzw. 7 Tage bei Raumtemperatur
6) angegeben ist die Gesamtlänge der Kratzspur in cm sowie die Länge der Kratzspur in cm jeweils nach Phase 1, 2 und 3
7) angegeben ist die Zeit in Minuten, nach der der Abdruck im Print Test nach Trocknung für 15 min 60°C und anschließender Lagerung der Tafeln für 10 Minuten bei Raumtemperatur nicht mehr sichtbar ist

### Diskussion der Prüfergebnisse

Der Vergleich der Ergebnisse der Pendeldämpfung und des Drying Recorders für die Beispiele 1 und 2 mit den Ergebnissen des Vergleichsbeispiels V1 zeigt, dass die Durchhärtung des erfindungsgemäßen Beschichtungsmittels nach Beispiel 1 und des nicht erfindungsgemäßen Beschichtungsmittels nach Beispiel 2 mit der Durchhärtung der herkömmlichen Beschichtungsmittel auf Basis zinnhaltiger Katalysatoren vergleichbar ist. Die erfindungsgemäße Beschichtungsmittelzusammensetzung des Beispiels 1 und die nicht erfindungsgemäße Beschichtungsmittelzusammensetzung des Beispiels 2 haben jedoch ein deutlich verbessertes, d.h. längeres, Potlife als die herkömmlichen Beschichtungsmittelzusammensetzungen auf Basis zinnhaltiger Katalysatoren des Vergleichsbeispiels V1.

Wie der Vergleich der Print-Test Ergebnisse der Beispiele 1 und 2 mit dem Vergleichsbeispiel V1 zeigt, zeichnen sich die Beschichtungsmittel des Beispiels 1 und 2 gleichzeitig durch eine relativ schnelle Aushärtung auch unter den Bedingungen der Reparaturlackierung und damit eine gute Montagefestigkeit bereits nach relativ kurzer Zeit aus, während üblicherweise ein verlängertes Potlife mit einer schlechteren, d.h. langsameren Aushärtung und somit guter Montagefestigkeit erst nach deutlich längerer Zeit erkauft wird. Dabei wird die Montagefestigkeit erfindungsgemäß durch Zusatz von Benzoesäure nach deutlich kürzerer Zeit erreicht werden, ohne dass hierdurch das Potlife gravierend negativ beeinflusst wird, wie der Vergleich der Beispiele 1 und 2 zeigt.

Wie die Ergebnisse des Print-Tests des Vergleichsbeispiels V2 zeigen, weisen die Beschichtungsmittel auf Basis des Zn(1,1,3,3-Tetramethylguanidin)₂(2-Ethylhexanoat)₂-Komplexes, aber ohne den Zusatz der Benzoesäure, eine deutlich langsamere Aushärtung unter den Bedingungen der Reparaturlackierung und damit eine schlechtere Montagefestigkeit auf als die erfindungsgemäßen Beschichtungsmittel unter Zusatz von Benzoesäure wie im Beispiel 1.

Die Beschichtungsmittel nach Beispiel 1 und 2 bzw. die entsprechenden Beschichtungen mit dem Katalysator K1 zeigen gegenüber dem Beschichtungsmittel bzw. der entsprechenden Beschichtung des Vergleichsbeispiels V2 mit dem Katalysator K2 entsprechend der WO06/022899 bei vergleichbarem Metallgehalt in der Formulierung eine deutlich geringere Vergilbung. Die entsprechenden Messergebnisse der Farbmessung (nach Herstellung der Beschichtungen wurden diese vor der Farbmessung zunächst 24 h bei Raumtemperatur gelagert) mit dem Mehrwinkelfarbmessgerät BYK-mac Firma BYK-Gardner GmbH, D-82538 Geretsried und Berechnung nach DIN 6174 mit Absolutwerten dargestellt als CieLab-Werte sind in Tabelle 2 dargestellt. Die "Delta-Werte" in Tabelle 2 sind jeweils gleich der Differenz des Farbwertes der Beschichtung des Vergleichsbeispiels V2 minus Farbwert der Beschichtung des erfindungsgemäßen Beispiels 1.

**Tabelle 2: Messergebnisse der Farbmessung dargestellt als CieLab-Werte der Beschichtung des Vergleichsbeispiels V2 und der Beschichtung des erfindungsgemäßen Beispiels 1**

| V2 | | L* | a* | b* |
|---|---|---|---|---|
| | -15 | 149,98 | -0,89 | 0,18 |
| | 15 | 136,15 | -0,59 | 0,17 |
| | 25 | 107,53 | -0,62 | -0,92 |
| | 45 | 62,93 | -0,61 | -1,19 |
| | 75 | 38,93 | -0,46 | -0,54 |
| | 110 | 32,82 | -0,62 | -0,35 |
| | | | | |

| E1 | | L* | a* | b* |
|---|---|---|---|---|
| | -15 | 145,6 | -0,92 | 0,26 |
| | 15 | 135,45 | -0,63 | 0,23 |
| | 25 | 107,37 | -0,63 | -0,88 |
| | 45 | 63,4 | -0,62 | -1,19 |
| | 75 | 39,49 | -0,49 | -0,55 |
| | 110 | 33,26 | -0,62 | -0,37 |
| | | | | |

| Delta¹⁾ | | dL¹⁾ | da¹⁾ | db¹⁾ |
|---|---|---|---|---|
| | -15 | 4,38 | 0,03 | -0,08 |
| | 15 | 0,70 | 0,04 | -0,06 |
| | 25 | 0,16 | 0,01 | -0,04 |
| | 45 | -0,47 | 0,01 | 0,00 |
| | 75 | -0,56 | 0,03 | 0,01 |
| | 110 | -0,44 | 0,00 | 0,02 |

| | | | | |
|---|---|---|---|---|
| ¹⁾ = jeweiliger Farbwert des Vergleichsbeispiels V2 minus Farbwert des erfindungsgemäßen Beispiels 1 | | | | |

Die Unterschiede in der Helligkeit lassen sich durch unterschiedliche Effektausbildung durch leichte Unterschiede im Lackauftrag durch die Handlackierung erklären. Die Beschichtung des erfindungsgemäßen Beispiels 1 zeigt insbesondere in den Aufsichtwinkeln -15°/ 15° /25° im db-Wert (=blau-gelb-Abweichung), dass die Beschichtung des erfindungsgemäßen Beispiels 1 weniger gelbstichig ist als die Beschichtung des Vergleichsbeispiels V2.

## Patentansprüche

1. Beschichtungsmittelzusammensetzung enthaltend mindestens eine Polyhydroxylgruppen-haltige Verbindung (A), mindestens eine Polyisocyanatgruppen-haltige Verbindung (B) mit freien und/oder blockierten Isocyanatgruppen, mindestens einen Katalysator (D) auf Basis eines Zink-Amidin-Komplexes, der herstellbar ist durch Umsetzung von 1,0 Molen eines oder mehrerer Zink(II)biscarboxylate mit 0,1 bis 1,8 Molen eines Amidins der Formel (I) oder mit 0,1 bis 1,8 Molen einer Mischung aus zwei oder mehreren Amidinen der Formel (I) 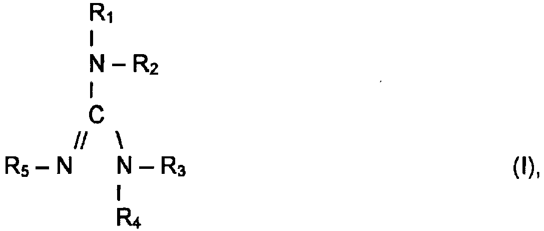 wobei R₅ = Wasserstoff und R₁, R₂, R₃, und R₄ jeweils gleiche oder verschiedene Reste sind, wobei R₁ und R₃ Wasserstoff oder ein Alkylrest oder ein Arylrest sind und R₂ und R₄ ein Alkylrest oder ein Arylrest sind, und mindestens eine monomere aromatische, ggf. substituierte Carbonsäure (S), deren Carboxylgruppe in Konjugation zu einem π-Elektronensystem steht.

2. Beschichtungsmittelzusammensetzung nach Anspruch 1, **dadurch gekennzeichnet, dass** die Reste R₂ und R₄ gleiche oder verschiedene acyclische, geradkettige oder verzweigte Alkylreste und/oder gleiche oder verschiedene Arylreste sowie die Reste R₁ und R₃ Wasserstoff oder gleiche oder verschiedene acyclische, geradkettige oder verzweigte Alkylreste und/oder gleiche oder verschiedene Arylreste sind, bevorzugt dass die Reste R₁, R₂, R₃, und R₄ acyclische aliphatische Alkylreste, besonders bevorzugt acyclische aliphatische Alkylreste mit eins bis vier Kohlenstoffatomen sowie ganz besonders bevorzugt Methylreste sind.

3. Beschichtungsmittelzusammensetzung nach Anspruch 1 oder 2, **dadurch gekennzeichnet, dass** der Zink-Amidin-Komplex entweder herstellbar ist durch Umsetzung von 1,0 Molen eines oder mehrerer Zink(II)biscarboxylate mit 0,1 bis 1,5 Molen und bevorzugt mit 0,5 bis 1,0 Molen eines Amidins der Formel (I) oder herstellbar ist durch Umsetzung von 1,0 Molen eines oder mehrerer Zink(II)biscarboxylate mit 0,1 bis 1,5 Molen und bevorzugt mit 0,5 bis 1,0 Molen einer Mischung aus zwei oder mehreren Amidinen der Formel (I).

4. Beschichtungsmittelzusammensetzung nach einem der Ansprüche 1 bis 3, **dadurch gekennzeichnet, dass** der Carboxylat-Rest des Zink-Amidin-Komplexes (D) ausgewählt ist aus der Gruppe der Carboxylat-Reste von aliphatischen linearen und/oder verzweigten, ggf. substituierten Monocarbonsäuren mit 1 bis 12 C-Atomen im Alkylrest und/oder von aromatischen, ggf. substituierten Monocarbonsäuren mit 6 bis 12 C-Atomen im Arylrest.

5. Beschichtungsmittelzusammensetzung nach einem der Ansprüche 1 bis 4, **dadurch gekennzeichnet, dass** die Beschichtungsmittelzusammensetzung als Komponente (D) Zn(1,1,3,3-Tetramethylguanidin)ₓ(acetat)₂, Zn(1,1,3,3-Tetramethylguanidin)ₓ(formiat)₂, Zn(1,1,3,3-Tetramethylguanidin)ₓ(benzoat)₂, Zn(1,1,3,3-Tetramethylguanidin)ₓ(2-Ethylhexanoat)₂, Zn(1,1,3,3-Tetramethylguanidin)ₓ(octoat)₂, Zn(1,3-Diphenylguanidin)ₓ(formiat)₂, Zn(1,3-Diphenylguanidin)ₓ(acetat)₂, Zn(1,3-Diphenylguanidin)ₓ(benzoat)₂, Zn(1,3-Diphenylguanidin)ₓ(2-Ethylhexanoat)₂ und/oder Zn(1,3-Diphenylguanidin)ₓ(octoat)₂, bevorzugt Zn(1,1,3,3-Tetramethylguanidin)ₓ(2-Ethylhexanoat)₂ und/oder Zn(1,1,3,3-Tetramethylguanidin)ₓ(octoat)₂ und/oder Zn(1,3-Diphenylguanidin)ₓ(2-Ethylhexanoat)₂ und/oder Zn(1,3-Diphenylguanidin)ₓ(octoat)₂ enthält, wobei jeweils x <= 1,8, insbesondere x = 1,5 bis 0,5, ist.

6. Beschichtungsmittelzusammensetzung nach einem der Ansprüche 1 bis 5, **dadurch gekennzeichnet, dass** die Beschichtungsmittelzusammensetzung als Carbonsäure (S) Benzoesäure, tert.-Butylbenzoesäure, 3,4-Dihydroxybenzoesäure, Salicylsäure und/oder Acetylsalicylsäure, bevorzugt Benzoesäure, enthält.

7. Beschichtungsmittelzusammensetzung nach einem der Ansprüche 1 bis 6, **dadurch gekennzeichnet, dass** die Beschichtungsmittelzusammensetzung mindestens einen Zink-Amidin-Komplex (D) in einer solchen Menge enthält, dass der Metallgehalt des Zink-Amidin-Komplexes, jeweils bezogen auf den Bindemittelanteil der Beschichtungsmittelzusammensetzung, zwischen 35 und 2000 ppm, bevorzugt zwischen 35 und 1000 ppm und besonders bevorzugt zwischen 100 und 1000 ppm, liegt und/oder die Beschichtungsmittelzusammensetzung 0 bis 15,0 Gew.-%, bevorzugt 0,2 bis 8,0 Gew.-% und besonders bevorzugt 0,5 bis 5,0 Gew.-%, mindestens einer aromatischen Carbonsäure (S) enthält, wobei die Gew.-%-Angaben wiederum jeweils bezogen sind auf den Bindemittelanteil der Beschichtungsm ittelzusammensetzung.

8. Beschichtungsmittelzusammensetzung nach einem der Ansprüche 1 bis 7, **dadurch gekennzeichnet, dass** die Beschichtungsmittelzusammensetzung als Komponente (B) mindestens eine Verbindung mit freien Isocyanatgruppen enthält und/oder dass es als Komponente (B) 1,6-Hexamethylendiisocyanat, Isophorondiisocyanat, oder 4,4'-Methylendicyclohexyldüsocyanat, die Biuret-Dimere der vorgenannten Diisocyanate und/oder die Isocyanurat-Trimere der vorgenannten Diisocyanate und/oder die asymmetrischen Trimere der vorgenannten Diisocyanate enthält.

9. Beschichtungsmittelzusammensetzung nach einem der Ansprüche 1 bis 8, **dadurch gekennzeichnet, dass** die Polyhydroxylgruppen-haltige Verbindung (A) ausgewählt ist aus der Gruppe der Polyacrylatpolyole, der Polymethacrylatpolyole, der Polyesterpolyole, der Polyurethanpolyole und/oder der Polysiloxanpolyole, insbesondere aus der Gruppe der Polyacrylatpolyole und/oder der Polymethacrylatpolyole.

10. Beschichtungsmittelzusammensetzung nach einem der Ansprüche 1 bis 9, **dadurch gekennzeichnet, dass** die Beschichtungsmittelzusammensetzung noch ein oder mehrere, von der Komponente (A) verschiedene, hydroxylgruppenhaltige Verbindungen (C) enthält und/oder dass das molare Äquivalentverhältnis der Hydroxylgruppen der hydroxylgruppenhaltigen Verbindung (A) plus ggf. (C) zu den Isocyanatgruppen der Komponente (B) zwischen 1:0,9 und 1 :1,5, bevorzugt zwischen 1:0,9 und 1:1,1, besonders bevorzugt zwischen 1:0,95 und 1:1,05, liegt.

11. Beschichtungsmittelzusammensetzung nach einem der Ansprüche 1 bis 10, **dadurch gekennzeichnet, dass** es eine nicht wässrige Beschichtungsmittelzusammensetzung ist und/oder dass sie Pigmente enthält.

12. Mehrstufiges Beschichtungsverfahren, **dadurch gekennzeichnet, dass** auf ein gegebenenfalls vorbeschichtetes Substrat eine pigmentierte Basislackschicht und danach eine Schicht aus der Beschichtungsmittelzusammensetzung nach einem der Ansprüche 1 bis 11 aufgetragen wird oder dass auf ein gegebenenfalls vorbeschichtetes Substrat eine pigmentierte oder unpigmentierte Schicht aus der Beschichtungsmittelzusammensetzung nach einem der Ansprüche 1 bis 11 aufgetragen wird.

13. Mehrstufiges Beschichtungsverfahren nach Anspruch 12, **dadurch gekennzeichnet, dass** nach Auftrag der pigmentierten Basislackschicht der aufgebrachte Basislack zunächst bei Temperaturen von Raumtemperatur bis 80°C getrocknet wird und nach dem Auftrag der Beschichtungsmittelzusammensetzung nach einem der Ansprüche 1 bis 11 bei Temperaturen zwischen 20 und 80°C, insbesondere zwischen 20 und 60°C, gehärtet wird.

14. Verwendung der Beschichtungsmittelzusammensetzungen nach einem der Ansprüche 1 bis 11 als Klarlack oder pigmentierter Lack für die Automobilreparaturlackierung und/oder für die Beschichtung von Automobilanbauteilen und/oder Kunststoffsubstraten und/oder Nutzfahrzeugen.

15. Mehrstufiges Beschichtungsverfahren nach Anspruch 12 oder 13, **dadurch gekennzeichnet, dass** es für die Automobilreparaturlackierung und/oder für die Beschichtung von Kunststoffsubstraten und/oder Nutzfahrzeugen eingesetzt wird.

16. Verwendung mindestens eines Zink-Amidin-Komplexes, der herstellbar ist wie in Anspruch 1 beschrieben und mindestens einer monomeren aromatischen ggf. substituierten Carbonsäure (S), deren Carboxylgruppe in Konjugation zu einem π-Elektronensystem steht, als Katalysatorsystem zur Katalyse der Urethanreaktion in Beschichtungsmittelzusammensetzungen, die mindestens eine Polyisocyanatgruppen-haltige Komponente und mindestens eine Polyhydroxylgruppen-haltige Komponente enthalten.

## Claims

1. A coating material composition comprising at least one polyhydroxyl group-containing compound (A), at least one polyisocyanate group-containing compound (B) having free and/or blocked isocyanate groups, at least one catalyst (D) based on a zinc-amidine complex which is preparable by reaction of 1.0 moles of one or more zinc(II) biscarboxylates with 0.1 to 1.8 moles of an amidine of the formula (I) or with 0.1 to 1.8 moles of a mixture of two or more amidines of the formula (I) 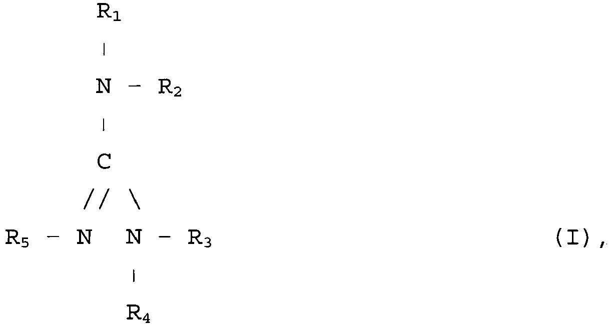 where R₅ = hydrogen and R₁, R₂ , R₃ , and R₄ are each identical or different radicals, R₁ and R₃ being hydrogen or an alkyl radical or an aryl radical, and R₂ and R₄ being an alkyl radical or an aryl radical, and at least one monomeric aromatic, optionally substituted carboxylic acid (S) whose carboxyl group is in conjugation with a n-electron system.

2. The coating material composition as claimed in claim 1, **characterized in that** the radicals R₂ and R₄ are identical or different acyclic, straight-chain or branched alkyl radicals and/or identical or different aryl radicals, and also the radicals R₁ and R₃ are hydrogen or identical or different acyclic, straight-chain or branched alkyl radicals and/or identical or different aryl radicals, preferably **in that** the radicals R₁, R₂, R₃, and R₄ are acyclic aliphatic alkyl radicals, more preferably acyclic aliphatic alkyl radicals having 1 to 4 carbon atoms, and very preferably methyl radicals.

3. The coating material composition as claimed in claim 1 or 2, **characterized in that** the zinc-amidine complex is either preparable by reaction of 1.0 moles of one or more zinc(II) biscarboxylates with 0.1 to 1.5 moles, and preferably with 0.5 to 1.0 moles, of an amidine of the formula (I), or preparable by reaction of 1.0 moles of one or more zinc(II) biscarboxylates with 0.1 to 1.5 moles, and preferably with 0.5 to 1.0 moles, of a mixture of two or more amidines of the formula (I).

4. The coating material composition as claimed in any of claims 1 to 3, **characterized in that** the carboxylate radical of the zinc-amidine complex (D) is selected from the group of the carboxylate radicals of aliphatic linear and/or branched, optionally substituted monocarboxylic acids having 1 to 12 C atoms in the alkyl radical and/or of aromatic, optionally substituted monocarboxylic acids having 6 to 12 C atoms in the aryl radical.

5. The coating material composition as claimed in any of claims 1 to 4, **characterized in that** the coating material composition comprises as component (D) Zn(1,1,3,3-tetramethylguanidine)ₓ(acetate)₂, Zn(1,1,3,3-tetramethylguanidine)ₓ(formate)₂, Zn(1,1,3,3 - tetramethylguanidine)ₓ(benzoate)₂, Zn(1,1,3,3-tetramethylguanidine)ₓ(2-ethylhexanoate)₂, Zn(1,1,3,3-tetramethylguanidine)ₓ(octoate)₂, Zn(1,3-diphenylguanidine)ₓ(formate)₂, Zn(1,3-diphenylguanidine)ₓ(acetate)₂, Zn(1,3-diphenylguanidine)ₓ(benzoate)₂, Zn(1,3-diphenylguanidine)ₓ(2-ethylhexanoate)₂, and/or Zn(1,3-diphenylguanidine)ₓ(octoate)₂, preferably Zn(1,1,3,3-tetramethylguanidine)ₓ(2-ethylhexanoate)₂ and/or Zn(1,1,3,3-tetramethylguanidine)ₓ(octoate)₂ and/or Zn(1,3-diphenylguanidine)ₓ(2-ethylhexanoate)₂ and/or Zn(1,3-diphenylguanidine)ₓ(octoate)₂ with x, in each case, being less than or equal to 1.8, in particular x = 1.5 to 0.5.

6. The coating material composition as claimed in any of claims 1 to 5, **characterized in that** the coating material composition comprises as carboxylic acid (S) benzoic acid, tert-butylbenzoic acid, 3,4-dihydroxybenzoic acid, salicylic acid and/or acetylsalicylic acid, preferably benzoic acid.

7. The coating material composition as claimed in any of claims 1 to 6, **characterized in that** the coating material composition comprises at least one zinc-amidine complex (D) in an amount such that the metal content of the zinc-amidine complex, based in each case on the binder fraction of the coating material composition, is between 35 and 2000 ppm, preferably between 35 and 1000 ppm, and more preferably between 100 and 1000 ppm, and/or the coating material composition comprises 0% to 15.0% by weight, preferably 0.2% to 8.0% by weight, and more preferably 0.5% to 5.0% by weight, of at least one aromatic carboxylic acid (S), the percentages by weight in turn being based in each case on the binder fraction of the coating material composition.

8. The coating material composition as claimed in any of claims 1 to 7, **characterized in that** the coating material composition comprises as component (B) at least one compound having free isocyanate groups and/or **in that** it comprises as component (B) 1,6-hexamethylene diisocyanate, isophorone diisocyanate, or 4,4'-methylenedicyclohexyl diisocyanate, the biuret dimers of the aforementioned diisocyanates and/or the isocyanurate trimers of the aforementioned diisocyanates and/or the asymmetric trimers of the aforementioned diisocyanates.

9. The coating material composition as claimed in any of claims 1 to 8, **characterized in that** the polyhydroxyl group-containing compound (A) is selected from the group of the polyacrylate polyols, the polymethacrylate polyols, the polyester polyols, the polyurethane polyols and/or the polysiloxane polyols, more particularly from the group of the polyacrylate polyols and/or the polymethacrylate polyols.

10. The coating material composition as claimed in any of claims 1 to 9, **characterized in that** the coating material composition further comprises one or more hydroxyl group-containing compounds (C) different from component (A), and/or **in that** the molar equivalents ratio of the hydroxyl groups in the hydroxyl group-containing compound (A) plus optionally (C) to the isocyanate groups of component (B) is between 1:0.9 and 1:1.5, preferably between 1:0.9 and 1:1.1, more preferably between 1:0.95 and 1:1.05.

11. The coating material composition as claimed in any of claims 1 to 10, **characterized in that** it is a nonaqueous coating material composition and/or **in that** it comprises pigments.

12. A multistage coating method **characterized in that** an uncoated or precoated substrate has applied to it a pigmented basecoat film and thereafter a film of the coating material composition as claimed in any of claims 1 to 11, or **in that** an uncoated or precoated substrate has applied to it a pigmented or unpigmented film of the coating material composition as claimed in any of claims 1 to 11.

13. The multistage coating method as claimed in claim 12, **characterized in that** application of the pigmented basecoat film is followed first by drying of the applied basecoat material at temperatures from room temperature to 80°C, and the application of the coating material composition as claimed in any of claims 1 to 11 is followed by curing at temperatures between 20 and 80°C, more particularly between 20 and 60°C.

14. Use of the coating material compositions as claimed in any of claims 1 to 11 as clearcoat material or pigmented coating material for automotive refinish and/or for the coating of parts for installation in or on automobiles, and/or of plastics substrates and/or of utility vehicles.

15. The multistage coating method as claimed in claim 12 or 13, **characterized in that** it is used for automotive refinish and/or for the coating of plastics substrates and/or of utility vehicles.

16. Use of at least one zinc-amidine complex which is preparable as described in claim 1, and at least one monomeric aromatic, optionally substituted, carboxylic acid (S) whose carboxyl group is in conjugation with a □-electron system, as a catalyst system for catalysis of the urethane reaction in coating material compositions which comprise at least one polyisocyanate group-containing component and at least one polyhydroxyl group-containing component.

## Revendications

1. Composition d'agent de revêtement contenant
au moins un composé contenant des groupes polyhydroxyle (A),
au moins un composé contenant des groupes polyisocyanate (B), contenant des groupes isocyanate libres et/ou bloqués,
au moins un catalyseur (D) à base d'un complexe de zinc-amidine, qui peut être fabriqué par mise en réaction de 1,0 mole d'un ou de plusieurs biscarboxylates de zinc (II) avec 0,1 à 1,8 mole d'une amidine de formule (I) ou avec 0,1 à 1,8 mole d'un mélange de deux amidines de formule (I) ou davantage 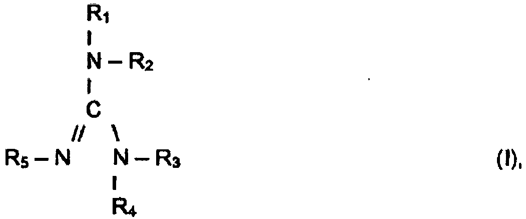 dans laquelle R₅ = hydrogène et R₁, R₂, R₃ et R₄ sont chacun des radicaux identiques ou différents, R₁ et R₃ représentant l'hydrogène ou un radical alkyle ou un radical aryle, et R₂ et R₄ représentant un radical alkyle ou un radical aryle, et
au moins un acide carboxylique aromatique monomère éventuellement substitué (S), dont le groupe carboxyle est conjugué avec un système d'électrons π.

2. Composition d'agent de revêtement selon la revendication 1, **caractérisée en ce que** les radicaux R₂ et R₄ sont des radicaux alkyle acycliques, linéaires ou ramifiés identiques ou différents, et/ou des radicaux aryle identiques ou différents, les radicaux R₁ et R₃ étant l'hydrogène ou des radicaux alkyle acycliques, linéaires ou ramifiés identiques ou différents, et/ou des radicaux aryle identiques ou différents, de préférence **en ce que** les radicaux R₁, R₂, R₃ et R₄ sont des radicaux alkyle aliphatiques acycliques, de manière particulièrement préférée des radicaux alkyle aliphatiques acycliques contenant un à quatre atomes de carbone, et de manière tout particulièrement préférée des radicaux méthyle.

3. Composition d'agent de revêtement selon la revendication 1 ou 2, **caractérisée en ce que** le complexe de zinc-amidine peut être fabriqué par réaction de 1,0 mole d'un ou de plusieurs biscarboxylates de zinc (II) avec 0,1 à 1,5 moles et de préférence avec 0,5 à 1,0 mole d'une amidine de formule (I), ou peut être fabriqué par réaction de 1,0 mole d'un ou de plusieurs biscarboxylates de zinc (II) avec 0,1 à 1,5 mole et de préférence avec 0,5 à 1,0 mole d'un mélange de deux amidines de formule (I) ou davantage.

4. Composition d'agent de revêtement selon l'une quelconque des revendications 1 à 3, **caractérisée en ce que** le radical carboxylate du complexe de zinc-amidine (D) est choisi dans le groupe des radicaux carboxylate d'acides monocarboxyliques aliphatiques linéaires et/ou ramifiés, éventuellement substitués, contenant 1 à 12 atomes C dans le radical alkyle et/ou d'acides monocarboxyliques aromatiques, éventuellement substitués, contenant 6 à 12 atomes C dans le radical aryle.

5. Composition d'agent de revêtement selon l'une quelconque des revendications 1 à 4, **caractérisée en ce que** la composition d'agent de revêtement contient en tant que composant (D) du Zn(1,1,3,3-tétraméthylguanidine)ₓ(acétate)₂, du Zn(1,1,3,3-tétraméthylguanidine)ₓ(formiate)₂, du Zn(1,1,3,3-tétraméthylguanidine)ₓ(benzoate)₂, du Zn(1,1,3,3-tétraméthylguanidine)ₓ(2-éthylhexanoate)₂, du Zn(1,1,3,3-tétraméthylguanidine)ₓ(octoate)₂, du Zn(1,3-diphénylguanidine)ₓ(formiate)₂, du Zn(1,3-diphénylguanidine)ₓ(acétate)_{2,} du zn(1,3-diphénylguanidine)ₓ(benzoate)₂, du Zn(1,3-diphénylguanidine)ₓ(2-éthylhexanoate)₂ et/ou du Zn(1,3-diphénylguanidine)ₓ(octoate)₂, de préférence du Zn(1,1,3,3-tétraméthylguanidine)ₓ(2-éthylhexanoate)₂ et/ou du Zn(1,1,3,3-tétraméthylguanidine)ₓ(octoate)₂ et/ou du Zn(1,3-diphénylguanidine)ₓ(2-éthylhexanoate)₂ et/ou du Zn(1,3-diphénylguanidine)ₓ(octoate)₂, avec à chaque fois x≤1,8, notamment x = 1,5 à 0,5.

6. Composition d'agent de revêtement selon l'une quelconque des revendications 1 à 5, **caractérisée en ce que** la composition d'agent de revêtement contient en tant qu'acide carboxylique (S) de l'acide benzoïque, de l'acide tert.-butylbenzoïque, de l'acide 3,4-dihydroxybenzoïque, de l'acide salicylique et/ou de l'acide acétylsalicylique, de préférence de l'acide benzoïque.

7. Composition d'agent de revêtement selon l'une quelconque des revendications 1 à 6, **caractérisée en ce que** la composition d'agent de revêtement contient au moins un complexe de zinc-amidine (D) en une quantité telle que la teneur en métal du complexe de zinc-amidine, à chaque fois par rapport à la proportion de liant de la composition d'agent de revêtement, soit comprise entre 35 et 2 000 ppm, de préférence entre 35 et 1 000 ppm, et de manière particulièrement préférée entre 100 et 1 000 ppm, et/ou la composition d'agent de revêtement contient 0 à 15,0 % en poids, de préférence 0,2 à 8,0 % en poids, et de manière particulièrement préférée 0,5 à 5,0 % en poids, d'au moins un acide carboxylique aromatique (S), les données de % en poids se rapportant de nouveau à chaque fois à la proportion de liant de la composition d'agent de revêtement.

8. Composition d'agent de revêtement selon l'une quelconque des revendications 1 à 7, **caractérisée en ce que** la composition d'agent de revêtement contient en tant que composant (B) au moins un composé contenant des groupes isocyanate libres et/ou **en ce qu'**elle contient en tant que composant (B) du diisocyanate de 1,6-hexaméthylène, du diisocyanate d'isophorone ou du diisocyanate de 4,4'-méthylènedicyclohexyle, les dimères biuret des diisocyanates susmentionnés et/ou les trimères isocyanurate des diisocyanates susmentionnés et/ou les trimères asymétriques des diisocyanates susmentionnés.

9. Composition d'agent de revêtement selon l'une quelconque des revendications 1 à 8, **caractérisée en ce que** le composé contenant des groupes polyhydroxyle (A) est choisi dans le groupe constitué par les polyacrylate-polyols, les polyméthacrylate-polyols, les polyester-polyols, les polyuréthane-polyols et/ou les polysiloxane-polyols, notamment dans le groupe constitué par les polyacrylate-polyols et/ou les polyméthacrylate-polyols.

10. Composition d'agent de revêtement selon l'une quelconque des revendications 1 à 9, **caractérisée en ce que** la composition d'agent de revêtement contient encore un ou plusieurs composés contenant des groupes hydroxyle (C) différents du composant (A), et/ou **en ce que** le rapport équivalent molaire entre les groupes hydroxyle du composé (A) plus éventuellement (C) contenant des groupes hydroxyle et les groupes isocyanate du composant (B) est compris entre 1:0,9 et 1:1,5, de préférence entre 1:0,9 et 1:1,1, de manière particulièrement préférée entre 1:0,95 et 1:1,05.

11. Composition d'agent de revêtement selon l'une quelconque des revendications 1 à 10, **caractérisée en ce qu'**il s'agit d'une composition d'agent de revêtement non aqueuse et/ou **en ce qu'**elle contient des pigments.

12. Procédé de revêtement à plusieurs étapes, **caractérisé en ce qu'**une couche de vernis de base pigmentée est appliquée sur un substrat éventuellement pré-revêtu, puis une couche de la composition d'agent de revêtement selon l'une quelconque des revendications 1 à 11, ou **en ce qu'**une couche pigmentée ou non pigmentée de la composition d'agent de revêtement selon l'une quelconque des revendications 1 à 11 est appliquée sur un substrat éventuellement pré-revêtu.

13. Procédé de revêtement à plusieurs étapes selon la revendication 12, **caractérisé en ce qu'**après l'application de la couche de vernis de base pigmentée, le vernis de base appliqué est tout d'abord séché à des températures allant de la température ambiante à 80 °C et, après l'application de la composition d'agent de revêtement selon l'une quelconque des revendications 1 à 11, durci à des températures comprises entre 20 et 80 °C, notamment entre 20 et 60 °C.

14. Utilisation des compositions d'agent de revêtement selon l'une quelconque des revendications 1 à 11 en tant que vernis transparent ou vernis pigmenté pour le vernissage de réparation automobile et/ou pour le revêtement de composants automobiles et/ou de substrats en plastique et/ou de véhicules utilitaires.

15. Procédé de revêtement à plusieurs étapes selon la revendication 12 ou 13, **caractérisé en ce qu'**il est utilisé pour le vernissage de réparation automobile et/ou pour le revêtement de substrats en plastique et/ou de véhicules utilitaires.

16. Utilisation d'au moins un complexe de zinc-amidine, qui peut être fabriqué tel que décrit dans la revendication 1 et d'au moins un acide carboxylique aromatique monomère éventuellement substitué (S), dont le groupe carboxyle est conjugué avec un système d'électrons π, en tant que système catalytique pour la catalyse de la réaction de l'uréthane dans des compositions d'agent de revêtement qui contiennent au moins un composant contenant des groupes polyisocyanate et au moins un composant contenant des groupes polyhydroxyle.
